# EUROPÄISCHE PATENTSCHRIFT

(11) **EP 0 219 012 B1**
(45) Veröffentlichungstag und Bekanntmachung des Hinweises auf die Patenterteilung: **20.01.1993**
(21) Anmeldenummer: 86113691.9
(22) Anmeldetag: 03.10.1986
(51) Int. Cl.: B42D 15/02

(54) **Datenträger mit einem optischen Echtheitsmerkmal sowie Verfahren zur Herstellung und Prüfung des Datenträgers**
Data carrier with an optical authenticity feature, and method of making and checking the data carrier
Porteur d'informations pourvu d'une marque d'authenticité optique ainsi que procédé de réalisation et de contrôle du porteur d'informations

(30) Priorität: 15.10.1985 DE 3536739
(43) Veröffentlichungstag der Anmeldung: 22.04.1987
(73) Patentinhaber: GAO Gesellschaft für Automation und Organisation mbH, 81307 München (DE)
(72) Erfinder: Becker, Wolfgang, Dipl.-Phys., D-8014 Neubiberg (DE); Merkle, Hansjürgen, Chem.-Ing., D-8000 München 60 (DE); Lass, Joseph, Dipl.-Phys.Dr., D-8000 München 40 (DE); Hierweger, Alexander, Dipl.-Ing., D-8183 Rottach-Egern (DE); Lob, Erwin, Dipl.-Ing., D-8000 München 70 (DE); Kaule, Wittich, Dipl.-Phys. Dr., D-8080 Emmerich (DE)
(74) Vertreter: Klunker . Schmitt-Nilson . Hirsch

(56) Entgegenhaltungen:
- EP-A- 0 078 320
- EP-A- 0 216 947
- DE-A- 3 425 263
- DE-C- 3 151 407
- DE-C- 3 248 784
- FR-A- 2 515 396
- GB-A- 2 132 136
- US-A- 4 417 784

## Beschreibung

Die Erfindung betrifft einen Datenträger, bei dem in einem inneren Volumenbereich Informationen mittels eines Laserstrahls eingebracht sind, die in Form von Änderungen der optischen Eigenschaften aufgrund einer irreversiblen, durch den Laserstrahl bewirkten Materialveränderung sichtbar sind sowie Verfahren zur Herstellung und Prüfung des Datenträgers.

Datenträger, wie z. B. Ausweiskarten, Kreditkarten, Bankkarten, Barzahlungskarten und dergleichen werden auf den verschiedensten Dienstleistungssektoren, beispielsweise im bargeldlosen Zahlungsverkehr sowie im innerbetrieblichen Bereich, in zunehmendem Maß eingesetzt. Infolge ihrer großen Verbreitung stellen sie einerseits typische Massenartikel dar; ihre Herstellung, d. h. die Fertigung des Kartenaufbaus und die Einbringung der kartenindividuellen Benutzerdaten, muß einfach und kostengünstig sein. Andererseits müssen die Karten so ausgebildet sein, daß sie in größtmöglichem Maße gegen Fälschung und Verfälschung geschützt sind. Die vielen bereits auf dem Markt und sich noch im Entwicklungsstadium befindlichen Arten von Ausweiskarten zeigen das Bemühen der einschlägigen Industrie, die beiden genannten gegenläufigen Bedingungen zu optimieren.

Aus der DE-PS 29 07 004 ist eine Ausweiskarte bekannt, bei der die obengenannten Bedingungen erfüllt sind. Das Verfahren zur Herstellung dieser bekannten Karte ist dadurch gekennzeichnet, daß die personenbezogenen Daten mittels eines Laserstrahls in die bereits fertiggestellte, kaschierte Karte eingeschrieben werden. Die Karte besteht aus einem opaken Karteninlett, das zwischen transparenten Deckschichten eingeschlossen ist. Der Beschriftungsvorgang erfolgt durch die transparente Deckfolie hindurch. Damit kann einerseits die Herstellung wesentlich vereinfacht werden, da unter anderem nach der Personalisierung keine weiteren Fertigungsschritte mehr erforderlich sind, und andererseits die Fälschungs- und Verfälschungssicherheit erhöht werden, da z. B. die Daten aufgrund der durch den Laserstrahl bewirkten Materialzerstörung in einer nicht mehr veränderbaren Form vorliegen. Bei geeigneter Wahl der Laserintensität kann gleichzeitig mit der Beschriftung des Inletts eine dazu kongruente Kennzeichnung im Volumen der Deckfolie bis hin zu deren Oberfläche erreicht werden. Die personellen Daten liegen dann in verschiedenen Kartenschichten kongruent vor. In einer speziellen Ausführungsform kann als zusätzliche Kennzeichnung in die Deckfolienoberfläche eine Reliefstruktur eingebracht werden, die in einfacher Weise auch manuell prüfbar ist. Sie stellt damit ebenfalls ein Echtheitsmerkmal dar und erschwert somit in hohem Maße jede Manipulation bzw. den Versuch, eine derartige Karte durch eine Eindrucksfälschung nachzuahmen.

Es wurde auch schon vorgeschlagen (DE-PS 31 51 407) als Aufzeichnungsmedium in der Karte eine Kunststoffschicht vorzusehen, die bei visueller Betrachtung völlig transparent erscheint, das Licht des Laserstrahls jedoch ausreichend absorbiert, so daß unter Einwirkung des Laserstrahls in der Folie eine Schwärzung erfolgt. Damit können in an sich transparente Schichten Bilder oder Daten mit einer hohen Auflösung und einer sehr guten Schriftqualität eingebracht werden.

Trotz dieser hohen Fälschungssicherheit und der relativ einfachen Prüfbarkeit ist man weiterhin bestrebt, die Gestaltungsmöglichkeiten der Karte bezüglich des visuellen Eindrucks zu erweitern und Verfälschungen und Totalfälschungen von Karten durch die Einführung zusätzlicher Echtheitsmerkmale, die nur mit hohem technischen Aufwand nachbildbar sind, weiter zu erschweren.

So ist es z. B. in diesem Zusammenhang bekannt, in Ausweiskarten lichtbeugende Elemente, wie Hologramme oder Beugungsgitter, einzubringen (DE-OS 25 55 214 und EP 105 099). Damit werden den Karten optische Effekte verliehen, die zugleich ein Schutz gegen fotografische oder xerografische Reproduktionen sind. Da die Herstellung dieser Hologramme bzw. Beugungsgitter in der Regel sehr kostspielig und verfahrenstechnisch sehr aufwendig ist, werden erst bei einer Massenfertigung mit hohen Stückzahlen Stückpreise für diese Elemente erreicht, die für deren Einsatz in Ausweiskarten vertretbar sind. Diese Massenfertigung setzt allerdings voraus, daß alle Hologramme bzw. Beugungsgitter den gleichen Informationsgehalt - vorwiegend in Form eines Emblems oder Logos -haben. Die Information wird üblicherweise mit einem Prägestempel in Plastikfolien eingeprägt. Die Plastikfolien werden mit reflektierenden Schichten unterlegt und die Oberfläche wegen ihrer mechanischen Empfindlichkeit mit einem Speziallack versiegelt. Das so gefertigte Hologramm oder Beugungsgitter wird dann bei der Kartenherstellung auf die Kartenoberfläche aufgeklebt. Derartige Elemente sind aber ein "Fremdkörper" im Kartenaufbau und können aus den obengenannten fertigungstechnischen Gründen nicht mit individuellen, auf die jeweiligen Karten abgestimmte Daten vorsehen werden, so daß es prinzipiell möglich ist, diese Elemente von z. B. unrechtmäßig erworbenen, echten Karten zu entfernen und auf andere, falsche Karten zu übertragen. Trotz des für die Herstellung von Hologrammen oder Beugungsgittern notwendigen hohen technischen Aufwands kann somit durch einfaches Austauschen bzw. Übertragen auf andere Karten die an sich schwierige Nachbildung derartiger Elemente umgangen werden.

Nachteilig bei der Verwendung von Hologrammen oder Beugungsgittern in Ausweiskarten ist außerdem, daß für deren visuelle Prüfung gute Lichtverhältnisse erforderlich sind. Schon bei normaler Raumbeleuchtung sind die gewünschten optischen Effekte nur schemenhaft oder gar nicht erkennbar. Statt dessen sieht der Betrachter bei der Prüfung eines Hologramms eine lediglich metallisch spiegelnde Fläche bzw. bei der Prüfung eines Beugungsgitters eine leicht schillernde Markierung. Beide Effekte sind bereits mit einfach beschaffbaren sogenannten Dekorationsmaterialien so nachahmbar, daß sie unter den genannten ungünstigen Lichtverhältnissen vom Laien von echten Hologrammen oder Beugungsgittern nicht unterschieden werden können. Sie sind daher für eine Echtheitsprüfung von Zahlungsmitteln, wie z. B. Kreditkarten, da nur unter besonders günstigen Lichtverhältnissen erkennbar, nur bedingt einsetzbar.

Bei den geprägten Hologrammen oder Beugungsgittern liegt das Merkmal außerdem in einer Reliefstruktur vor, von der mit geeigneten Mitteln auch ein Abdruck erstellt werden kann, der das Nachprägen echter Hologramme ermöglicht.

Es wurde nun weiterhin bereits vorgeschlagen, zum Schutz von Markenartikeln, z. B. Schallplatten, diese mit einem Echtheitskennzeichen auszustatten (EP-A 78 320). Das Echtheitskennzeichen besteht aus einer transparenten Folie, die an ihrer Oberfläche ein feines Linsenraster (Zylinderlinsen) aufweist. Diese Zylinderlinsen haben einen Durchmesser von ca. 17 µ und liegen auf einer 100 µ dicken Polyesterschicht auf, auf deren Rückseite Empfangsschichten für die Polaroidfotografie angebracht sind. Man kann diese Struktur von der Vorderseite unter verschiedenen Winkeln belichten und erhält dann auf der Fotoschicht nach deren Entwicklung ein feines Linienraster. Die eigentliche Bildinformation wird durch Modifikation in der Struktur der Linsen herbeigeführt, in dem in einem Teilbereich der Folie die Zylinderlinsen gegenüber den Restbereichen versetzt eingeprägt sind. Diese Teilbereiche entsprechen in ihrer Form dem einzubringenden Motiv.

Da das Muster durch die partielle Versetzung der Zylinderlinsen eingebracht wird, eignet sich dieses Merkmal aus wirtschaftlichen Gründen, ähnlich wie die bereits zitierten Beugungsgitter, nur für die Einbringung eines für eine große Serie gleichbleibenden Motivs.

Wegen der notwendigen fotografischen Entwicklung der unter dem Linsenraster liegenden Fotoschicht ist es weiterhin erforderlich, dieses Element separat herzustellen und als vorgefertigtes Produkt an dem Markenartikel oder an einem mit dem Artikel verbundenen Etikett zu befestigen. Es stellt damit ebenfalls einen Fremdkörper dar, der ablösbar und damit auf andere Artikel übertragbar ist, wobei die Fotoschicht auf der Folienrückseite das Ablösen zusätzlich erleichtert.

Aus der EP-OS 0 126 947, die Stand der Technik gemäß Artikel 54(3) EPÜ darstellt, ist es bekannt, die transparente Deckfolie einer Ausweiskarte mit einem Oberflächenrelief zu versehen und den darunter liegenden Kartenkern durch diese Deckfolie hindurch mit einem Laser zu beschriften. Hierbei werden die erhabenen Bereiche des Reliefs so ausgebildet, daß sie die auffallende Strahlung fokussieren. Die Strahlung ruft somit in diesem Fokusbereich eine stärkere Schwärzung des Kartenkerns hervor. In den relieffreien Bereichen erfolgt keine Fokussierung der Strahlung, so daß hier eine geringere Schwärzung des Kartenkerns auftritt. Zwischen den Bereichen starker und schwacher Schwärzung liegt aufgrund der Linsenwirkung des Reliefs ein Bereich auf welchen keinerlei Laserstrahlung auftrifft und der daher keine Schwärzung aufweist. Auf diese Weise ist es möglich, auf eine Ausweiskarte bei gleichmäßiger Bestrahlung mit Laserlicht Informationen in Form stark geschwärzter Bereiche vorzusehen, wobei diese Informationen durch ungeschwärzte Bereiche von der gleichmäßigen Untergrundschwärzung getrennt sind.

Die Aufgabe der Erfindung besteht daher darin, unter Beibehaltung der technologischen und sicherheitstechnischen Vorteile des Laserbeschriftungsverfahrens die Gestaltungsmöglichkeiten für Datenträger bezüglich des visuellen Eindrucks zu erweitern, wobei die Datenträger fotografisch oder xerografisch nicht reproduzierbare Merkmale enthalten soll, die maschinell und auch bei schlechten Lichtverhältnissen in einfacher Weise visuell prüfbar sind.

Diese Aufgabe wird durch die im Kennzeichen des Hauptanspruchs enthaltenen Merkmale gelöst.

Verfahren zur Herstellung derartiger Datenträger sowie Verfahren und Vorrichtung zu deren Echtheitsprüfung sind Gegenstand weiterer nebengeordneter Ansprüche.

In einer vorteilhaften Ausführungsform der Erfindung wird in eine transparente Folienschicht eines Datenträgers, die die Deckfolie bildet, ein Linsenraster in Form mehrerer nebeneinander angeordneter Zylinderlinsen mit geradlinig oder nicht geradlinig verlaufenden Zylinderachsen und/oder Kugellinsen eingeprägt. Dabei können auch die Brennweiten der einzelnen Linsen, z. B. entsprechend einem vorgegebenen Muster, variieren oder auch die Zylinderlinsen und/oder Kugellinsen entsprechend einem vorgegebenen Muster angeordnet werden. Zwischen dieser mit dem Linsenraster versehenen Deckfolie und der Kernschicht wird vorzugsweise eine weitere transparente Kunststoffschicht angeordnet, deren optische Eigenschaften sich unter Einwirkung von Laserstrahlen verändern, so daß z. B. eine Schwärzung auftritt.

Mittels eines Laserstrahls werden durch diese Linsen hindurch Informationen auf darunterliegende Volumenbereiche des Datenträgers eingebracht. Der Laserstrahl wird dabei in einem bestimmten Winkel zur Ebene des Linsenrasters gehalten. Beim Durchgang durch die Linsen wird das Licht des Laserstrahls an den eingeprägten Linsen nachfokussiert. Die Veränderung im darunterliegenden Volumenbereich beschränkt sich - vermutlich auch aufgrund der Erhöhung der Leistungsdichte durch die Nachfokussierung des Laserstrahls - auf einen gegenüber dem ursprünglichen Strahldurchmesser des Lasers enger begrenzter Volumenbereich. Eine auf diese Weise eingebrachte Information ist nur unter dem Winkel sichtbar, unter dem der Laserstrahl auf die Linsenrasterfläche auftraf, wobei die Information je nach Größe des verfärbten Volumenbereichs in einem mehr oder weniger großen Winkelbereich sichtbar ist. Im bevorzugten Ausführungsbeispiel, bei dem an sich transparente, aber für den Laserstrahl empfindliche, d. h. unter Einwirkung eines Laserpuls mit einer bestimmten Pulsenergie sich verfärbende, Folien für die Aufzeichnung verwendet werden, können bei ausreichender Foliendicke diese verfärbten Volumenbereiche in Form von Stäbchen erzeugt werden, die in Richtung des Laserstrahls ausgerichtet sind. Derartige Stäbchen weisen im notwendigen Betrachtungswinkel trotz geringer Pixelgröße (Stäbchendurchmesser) eine hohe Schwärzungsdicht auf, durch die die Erkennbarkeit der Laserinformationen in besonderem Maß positiv beeinflußt wird.

Unterschiedliche Informationen können somit unter verschiedenen Winkeln in den Datenträger eingebracht und unter den entsprechenden Winkeln deutlich erkennbar wieder getrennt betrachtet werden.

Eine Information, die z. B. unter senkrechtem Einfallswinkel mit dem Laser eingebracht wird, kann z. B. ein Logo, ein Emblem oder ein Hoheitszeichen sein. Eine weitere Information, z. B. das Gültigkeitsdatum, wird unter einer Winkelabweichung von z. B. plus 27° von der Kartennormalen ausgehend eingebracht und ist unter diesem Winkel wieder auslesbar. Eine dritte Information, die in Gegenrichtung unter einer Winkelabweichung von z. B. minus 27° zur Normalen des Datenträgers eingebracht wird, kann eine von Datenträger zu Datenträger variierende Information sein (z. B. eine Laufnummer oder auch bei bankbezogenen Datenträgern die Kontonummer).

Der Datenträger weist damit ein optisches Merkmal auf, das unter verschiedenen Betrachtungswinkeln unterschiedliche Informationen wiedergibt. Obwohl ähnlich wie bei Beugungsgittern oder Hologrammen die Bildinformationen nur unter bestimmten Betrachtungswinkeln erkennbar sind, baut der optische Effekt nicht auf Beugungserscheinungen oder Interferenzen auf. Gemäß der Erfindung besteht das optische Merkmal vielmehr aus mindestens einer zur Umgebung kontrastierenden Information, die wie ein übliches "Laserschriftbild" ohne Hilfsmittel auch bei sehr schlechten Lichtverhältnissen eindeutig prüfbar ist.

Durch entsprechende Steuerung der Laserpulsleistung bei der Beschriftung der Folie sind auch Vergrößerungen des verfärbten Volumenbereichs erreichbar, durch die Bildinformationen so eingeschrieben werden können, daß sie unabhängig vom Betrachtungswinkel permanent erkennbar sind. Eine Kombination des im folgenden als "Kippbild" bezeichneten Effektes zusammen mit permanenten Daten im Bereich des Linsenrasters und benutzerbezogenen weiteren Laserpersonalisierungsdaten im das Linsenrasterfeld umgebenden Kartenbereich, die in Schriftbild und Aufzeichnungscharakteristik gleich sein können, erleichtert die Prüfung auf Echtheit und erhöht noch verstärkt den Schutz vor Fälschung und/oder Verfälschung. Überlappen die gelaserten Daten mit fertigungstechnisch hochwertigen normalen Druckbildern, z. B. mit Guillochhintergrunddruck, wie sie aus dem Stand der Technik bekannt sind, so wird eine aus sicherheitstechnischer Sicht besonders günstige Verkettung von Sicherheitselementen erreicht.

Durch das erfindungsgemäße Verfahren ist nun die Möglichkeit gegeben, einen an sich fertiggestellten Datenträger, z. B. eine Ausweiskarte, mit einem derartigen Kippbild zu versehen, wobei in einfacher Weise auch durch entsprechende Laserstrahlsteuerung von Karte zu Karte unterschiedliche Informationen eingebracht werden können. Durch die Einbringung individueller Kartendaten in dieses Kippbild ist es als Echtheitsmerkmal kartenspezifisch, d. h. es ist jeweils an eine bestimmte Karte gebunden und nicht auf andere Karten übertragbar, wie es z. B. bei den eingangs zitierten Hologrammen und Beugungsgittern der Fall ist. Diese Individualisierung, durch die die Fälschungssicherheit erheblich verbessert wird, ist bei Verwendung eines rechnergesteuerten Lasers praktisch ohne Mehraufwand erreichbar. Das Kippbild wird vorzugsweise in dem Augenblick aufgezeichnet, in dem auch die übliche Personalisierung durchgeführt wird, so daß alle Daten sicher und richtig zusammengefügt werden. Es kann damit auf einfache Weise ausgeschlossen werden, daß fälschlicherweise die kartenindividuellen Daten des Kippbilds mit den Personalisierungsdaten einer anderen Karte der Fertigungsserie zusammengefügt werden. Da chemische Entwicklungsprozesse und dergleichen völlig entfallen, ist die Kartenbeschriftung auf einen einzigen Verfahrensschritt begrenzt und deshalb besonders fertigungsfreundlich. Nachfolgende Fertigungsschritte, die die Zerstörung der Karte (Ausschuß) nicht ausschließen, entfallen ebenfalls.

Wird z. B. statt dem Logo ein Foto des Kartenbenutzers eingebracht, so ist dieses Bild fest mit den benutzerbezogenen Individualdaten, z. B. der Kontonummer, verbunden und ein Austausch von Fotos zwischen echten und gefälschten oder nachgeahmten Karten ist daher ebenfalls nicht mehr möglich. Diese an sich einfach durchführbare irreversible Verknüpfung benutzerbezogenen Individualdaten mit anderen Bildinformationen wirkt sich besonders vorteilhaft aus und trägt in hohem Maße zur Erhöhung der Fälschungssicherheit von Ausweiskarten bei.

Dieses Kippbild ist zudem fotografisch oder mit kopiertechnischen Mitteln nicht reproduzierbar, da unter einem Aufnahmewinkel nie die gesamte Information vorliegt. Die Abänderung des Kippbildes ist wegen des für den Laserschreiber charakteristischen Schriftbildes nicht möglich. Wird die Bildinformation z. B. im Volumen transparenter Folien eingebracht, so ist dies ein weiteres Charakteristikum, das visuell erkennbar ist und eine weitere Hürde für die Nachahmung darstellt, da nun die technischen Probleme derart hoch sind und der benötigte Aufwand in keinem Verhältnis zum möglichen "Gewinn" steht.

Sowohl die transparente Folie mit den eingeprägten Zylinder- oder Kugellinsen als auch die informationstragenden Folien sind vorzugsweise ganzflächig im Kartenaufbau befindliche Folien und bilden somit einen integralen Bestandteil der Karte. Eine Manipulation der Daten hat daher in der Regel die Zerstörung der Karte zur Folge. Sollte es bei einfacherem Kartenaufbau einem Fälscher gelingen, den Schichtaufbau zu trennen, so wird die funktionstüchtige Wiedervereinigung der Schichten durch den Umstand verhindert, daß sich die Schwärzung in den tieferliegenden Volumenbereichen meist in Form stäbchenförmiger Pixel über mehrere Schichten erstreckt und diese schon wegen der beim Trenn- und/oder Wiedervereinigungsvorgang unvermeidlichen Materialflusses nicht wieder so zusammengeführt werden können, daß die geschwärzten Volumenbereiche in ursprünglicher Form und Lage zurückgebildet werden.

Bei einem derartigen Manipulationsversuch stellt sich einem Fälscher zusätzlich noch die Aufgabe, daß sowohl beim Loslösen der Folie als auch beim Wiederaufbringen das Linsenraster erhalten bleiben muß. Wird die Folie, wie bei Manipulationsversuchen üblich, mittels eines heißen Bügeleisens abgelöst, ist aber das Flachbügeln des Linsenrasters sowie ein Verziehen der Folie unumgänglich, so daß die Wiederverwendung der Folie und damit auch der Karte nicht möglich ist.

Das Kippbild schützt daher die Karte auch vor Delaminierung der Deckschicht und darauffolgender Manipulation irgendwelcher im Karteninneren befindlicher Daten.

Eine Manipulation an den gelaserten Daten selbst ist außerdem nicht möglich, da der Laser eine irreversible Zerstörung des Kartenmaterials bewirkt.

Das Kippbild kann beim Personalisierungsvorgang - entsprechend der aus der DE-PS 29 07 004 bekannten Lehre -unter Anwendung der gleichen Technologie (Laserbeschriftung) in die Karte eingebracht werden. Der Versand von Blankokarten - noch nicht personalisierte Karten - ist unkritisch, da dieses optische Echtheitsmerkmal in Form des Kippbilds bei diesen Karten noch nicht vorliegt und erst im letzten Arbeitsgang bei der Personalisierung mit relativ hohem technologischen Aufwand eingebracht wird. Erst nach Einbringung des Kippbilds ist die Karte somit aktiviert und erhält ihren "Gültigkeitsstempel".

Weitere Vorteile und vorteilhafte Ausführungsformen sind Gegenstand der folgenden Beschreibung der Erfindung anhand der Figuren.

Die Figuren zeigen:
- Fig. 1: eine erfindungsgemäße Karte in der Aufsicht
- Fig. 2a, b, c: Darstellung der einzelnen Verfahrensschritte zur Einbringung verschiedener Teilinformationen,
- Fig. 3: Darstellung der unter verschiedenen Blickwinkeln sichtbaren Informationen,
- Fig. 4 a - g: verschiedene Ausführungsformen eines in einer Kunststoffschicht erzeugten erfindungsgemäßen Kippbilds,
- Fig. 5: den Beschriftungsvorgang im Punktscanningverfahren,
- Fig. 6: eine schematische Darstellung einer Prüfvorrichtung und
- Fig. 7, 8: weitere Ausführungsformen der Erfindung.

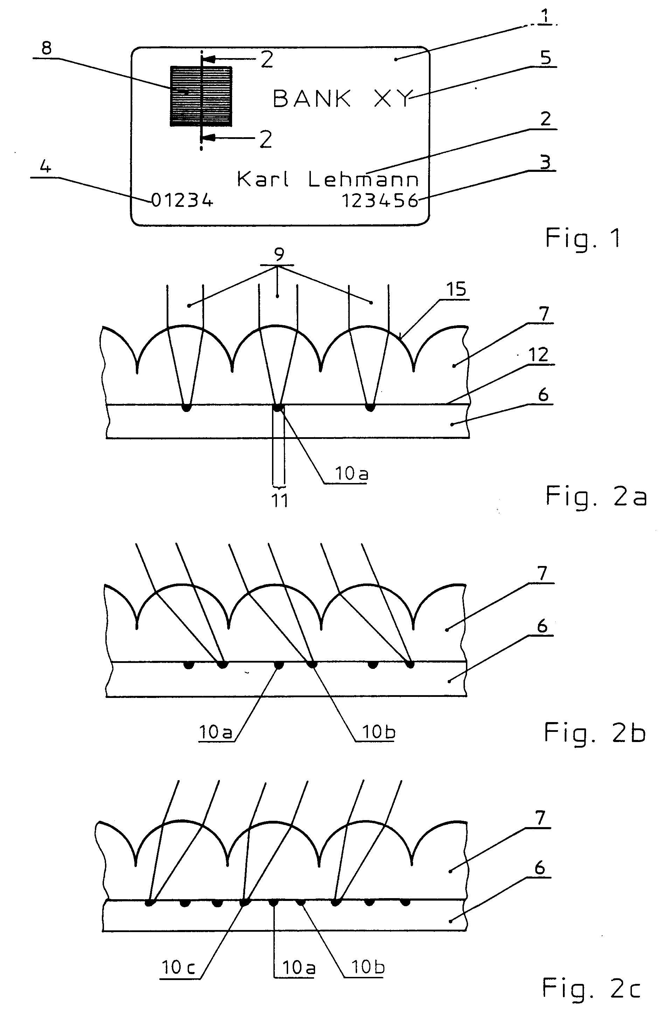

Fig. 1 zeigt eine Ausweiskarte 1, die mit den allgemein üblichen Daten versehen ist, wie z. B. den Namen des Benutzers 2, einer Kontonummer 3, einer Kartennummer 4 und den Institutsangaben 5. Die benutzerbezogenen Daten 2, 3 werden vorzugsweise mit einem Laser durch eine transparente Deckfolie hindurch in einen inneren Volumenbereich eingebrannt, während die allgemeinen Angaben, wie z. B. die Institutsangabe 5, mit drucktechnischen Verfahren auf eine der Kartenschichten aufgedruckt sind. In einem Teilbereich 8 der Karte ist ein optisches Echtheitsmerkmal in Form eines Kippbildes eingebracht, dessen Aufbau und Herstellung im weiteren Verlauf näher beschrieben wird.

Ein Kartenaufbau in einer einfachen Ausführungsform einer derartigen Karte ist in der Fig. 2 gezeigt. Die Karte besteht aus einer Kernschicht 6 aus Papier oder Kunststoff, auf deren Vorder- und gegebenenfalls auch Rückseite Informationen mit drucktechnischen Mitteln oder nach dem aus der DE-PS 29 07 004 bekannten Laserbeschriftungsverfahren aufgebracht sind. Der Kartenkern kann zur Erhöhung der Fälschungssicherheit mit einem Sicherheitsdruckbild und weiteren Sicherheitsmerkmalen, wie z. B. Wasserzeichen, Sicherheitsfaden und/oder fluoreszierenden Substanzen, ausgestattet sein.

Die Kartenkernschicht ist zumindest auf einer Seite, der Vorderseite, mit einer transparenten Deckschicht 7 versehen. In die Oberfläche der Deckschicht ist in einem Teilbereich eine Reliefstruktur in Form mehrerer nebeneinander angeordneter Zylinderlinsen l5 eingeprägt. Durch diese Zylinderlinsen wird das Blickfeld infolge der Fokussierung eingeengt und es sind daher, bei Betrachtung der Karte unter einem bestimmten Winkel, in der Fokusebene der Linsen nur streifenförmige Teilbereiche einer darunterliegenden datentragenden Schicht 12 sichtbar.

Anstatt der Zylinderlinsen können auch - zur Erzielung des gleichen Effekts - andere Linsenformen, wie z. B. Kugellinsen oder eine Mischung unterschiedlicher Linsenformen verwendet werden. Die Zylinderlinsen können auch in geschwungenen Linien verlaufen. Des weiteren ist es, insbesondere bei Kartenaufbauten, bei denen die Aufzeichnung im Volumen transparenter Kunststoffschichten erfolgt, problemlos möglich, die Brennweiten und/oder auch die Rasterperiode innerhalb eines Linsenrasters zu variieren, wobei im letzteren Fall die Rasterperiode auch so gewählt werden kann, daß sie größer als der Linsendurchmesser ist. Auch die Lage der Linsen kann so variiert werden, daß die Scheitel nebeneinander angeordneter Linsen, bezogen auf die Oberfläche des Datenträgers, in unterschiedlichen Höhen liegen.

Durch entsprechende Wahl der Linsenform, der Anordnung der Einzellinsen, der Rasterperiode, etc. kann das Linsenraster in einer für einen speziellen Kartentyp typischen Form ausgebildet werden, wobei auch gezielt vorbestimmte Muster eingebracht werden können.

In diesem Fall ist bereits das Linsenraster selbst aufgrund seiner spezifischen Reliefstruktur ein Echtheitsmerkmal, das visuell und/oder maschinell geprüft werden kann. Des weiteren stellt dies dem Fälscher eine weitere Hürde dar, da er eventuell nun gezwungen ist, das für einen bestimmten Ausweiskartentyp oder Verwendungszweck speziell erstellte Linsenraster nachzubilden.

Geeignete Materialien für die transparente, mit dem Linsenraster versehene Schicht, sind z. B. Kunststoffe, die für den Laserstrahl zumindest bis zu bestimmten Intensitäten durchlässig sind, wie z. B. handelsübliche PVC-Folien. Diese Folien haben den Vorteil, daß sie sich z. B. unter Anwendung von Wärme und Druck mit anderen Kunststoffolien oder Papierschichten der Karte gut verbinden lassen. Die einzelnen Kartenschichten werden dabei zwischen zwei erwärmte Kaschierplatten gelegt und unter Druck zu einer Einheit verbunden.

Das Linsenraster kann bei diesem Kaschiervorgang eingeprägt werden, indem in die entsprechende Kaschierplatte ein Negativ des Linsenrasters eingearbeitet wird. Ebenso kann eine thermostabile Prägematrize verwendet werden, die zwischen der transparenten Deckschicht und der Kaschierplatte eingelegt wird.

Es ist aber auch durchaus möglich, die Karte nach dem allgemein üblichen Verfahren zu laminieren und das Linsenraster anschließend mittels eines Prägestempels oder einer Prägerolle einzubringen.

Die Linsen (Zylinder- oder Kugellinsen) haben vorzugsweise eine Breite bzw. einen Durchmesser von 400 µ und für die transparente, geprägte Schicht wird vorzugsweise eine Gesamtdicke um 350 µm gewählt.

In die Karte werden mittels eines vorzugsweise im Pulsbetrieb betriebenen Lasers, z. B. eines ND-YAG-Lasers, Informationen eingebracht, wobei der Laserstrahl 9 unter bestimmten Winkeln auf das Linsenraster gerichtet wird. Eine erste Information, z. B. in Form eines Logos, eines Emblems oder eines Fotos des Kartenbenutzers, wird unter senkrechtem Einstrahlwinkel eingebracht (Fig. 2a). Die Datenaufzeichnung erfolgt vorzugsweise im Punktscanverfahren. Das Linsenraster wird dabei Punkt für Punkt vom Laserstrahl abgefahren und die Intensität der Laserimpulse entsprechend der Bildinformation moduliert. Das dabei entstehende Bild setzt sich somit aus einzelnen Rasterpunkten, sogenannter Pixel, zusammen.

Beim Durchgang des Laserstrahls durch die Zylinderlinsen wird der Strahl wirkungsvoll nachfokussiert. Die Beschriftung begrenzt sich daher auf schmale, unterhalb des Zentrums der einzelnen Linsen liegende Teilbereichen 11 in Form von Streifen. Die Information liegt dann in Form einzelner Streifenbilder vor, wobei die Streifen aus einer Folge voneinander getrennter Pixel gebildet werden. Durch geeignete Wahl des Kartenaufbaus, der Schichtmaterialien, deren Dicke, der Linsenrasterstruktur und der Laserparameter kann die sich durch die Lasereinstrahlung bewirkte Veränderung im Kartenmaterial in ihrer Form und Lage gezielt beeinflußt werden. In dem in den Fig. 2 a -c gezeigten Ausführungsbeispiel wurden - auch um die Darstellung zu vereinfachen -, die o.g. Parameter so gewählt, daß sich die Materialveränderung auf den Oberflächenbereich der Kartenkernschicht begrenzt. In vielen Fällen ist aber eine derartige scharfe Begrenzung nicht erreichbar. Vielmehr wird sich eine optisch erkennbare Materialveränderung über einen größeren Tiefenbereich ergeben, wobei auch angrenzende Schichten, z. B. die Deckschicht, vermutlich aufgrund der erhöhten Energiedichte im nachfokussierten Bereich des Laserstrahls lokal verändert werden. Dies ist aber kein Nachteil, sondern ein Vorteil, denn dadurch führen - wie eingangs erläutert- Manipulationen, bei denen die Schichten getrennt und anschließend wieder zusammengefügt werden müssen, nicht zum gewünschten Ziel. Nach Einbringung dieser ersten Information wird die Karte um einen bestimmten Winkel, beispielsweise 27°, nach einer Seite gekippt oder der Einstrahlwinkel durch in den Strahl gestellte Prismen entsprechend verändert (Fig. 2b) und eine zweite Information, die z. B. den Gültigkeitszeitraum der Karte festlegt, in der gleichen Weise in Form eines Streifenbildes 10b eingebracht. Anschließend wird die Karte zur anderen Seite, vorzugsweise um die gleiche Winkeldifferenz von der Kartennormalen abweichend, gekippt und eine dritte Information (Streifenbild 10c, Fig. 2c) eingebracht. Diese Information kann z. B. kartenspezifische Angaben wie die Kontonummer enthalten.

Bei anschließender Betrachtung des Kippbildes ist bei senkrechtem Betrachtungswinkel nur die durch das Streifenbild 10a dargestellte Information sichtbar, während bei seitlicher Betrachtung bzw. nach Kippen des Datenträgers die zweite bzw. dritte Information, gebildet durch die Streifenbilder l0b bzw. l0c, sichtbar sind. Wird die Karte noch weiter gekippt, so verschwinden diese Informationen wieder und es kann nach einer weiteren Drehung der Karte in gleicher Richtung das eigentlich zu den jeweils benachbarten Zylinderlinsen gehörende, angrenzende Streifenbild im Blickfeld erscheinen. Damit erfolgt ein erneuter Informationswechsel. Wird die Karte z. B. nach Beobachtung der zweiten Information in der gleichen Richtung weitergekippt, so erscheint nach einem bestimmten Drehwinkel die dritte Information, da jetzt dieses Streifenbild in das "Blickfeld" wandert.

Normalerweise würden die Bilder durch die Schrägstellung der Karte während der Aufzeichnung schon aus der zur Verfügung stehenden Schärfentiefe des Lasers herausfallen. Die Zylinderlinsen fokussieren aber nach, so daß in jedem Fall eine Fokussierung in der Karte, vom Beschriftungswinkel abhängig, allerdings in unterschiedlichen Tiefen, zustandekommt. Dies bleibt aber vom Beobachter unerkannt, so daß im gesamten Bereich dieser Logos keine Schärfenunterschiede erkennbar sind. Die relativ große Strichdicke, mit der der Laser im Material aufzeichnet, führt auch dazu, daß es sich nicht als nachteilig erweist, daß der Laserstrahl in jedem Bildbereich nicht unter dem genau gleichen Winkel einfällt, wenn er durch Drehung der Ablenkspiegel über das Linsenraster hinweggeführt wird. Jede Linse wird also unter einem geringfügig unterschiedlichen Winkel zur Vorlinse getroffen.

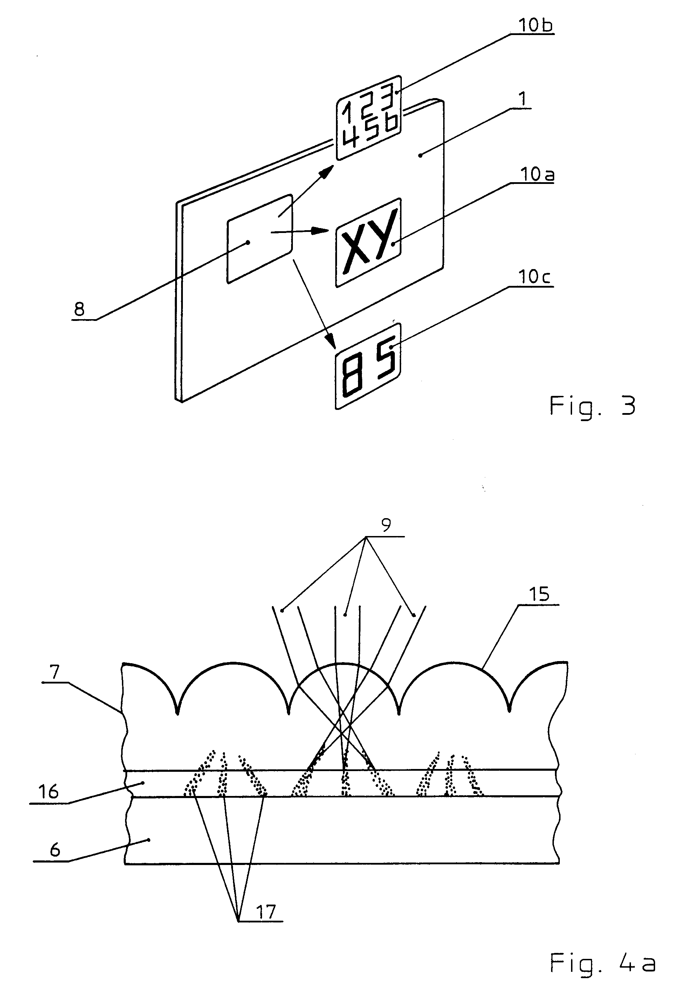

Obwohl die einzelnen Informationen in vermischter Anordnung vorliegen, sind sie unter den entsprechenden Blickwinkeln wieder getrennt sichtbar sind. Die Fig. 3 zeigt in einer räumlichen Darstellung die unter den verschiedenen Winkeln sichtbaren Teilbilder. Die Informationen können dabei völlig unabhängig voneinander, entsprechend dem obengenannten Beispiel, oder auch in einer bestimmten Beziehung zueinander stehen. So kann z. B. ein einzelnes Motiv in den verschiedenen Aufnahmewinkeln in einer jeweils leicht veränderten Form (z. B. verschiedene Ansichten), dargestellt sein. Weiterhin ist es möglich, Markierungen so einzubringen, daß bei der Kippbewegung der Karte der Eindruck eines bewegten Bildes entsteht.

Dabei wird z. B. an einem Ende des Linsenrasters, beginnend unter einem Aufnahmewinkel von ca. 30° zur Kartennormalen, eine Markierung eingebracht. Während der Abtastung des Linsenrasters mittels des Laserstrahls in Querrichtung zu den Linsen wird der Aufnahmewinkel kontinuierlich in einer Richtung oder in festgesetzten Schritten verändert. Die Lage der Markierung in der Datenempfangsschicht verschiebt sich daher gegenüber der Lage des Zentrums der Zylinderlinsen, so daß bei Betrachtung der Karte - unter leichtem Kippen - der Eindruck entsteht, daß die Markierung von einem Ende des Linsenrasters zum anderen Ende wandert.

Die erfindungsgemäße Einbringung verschiedener Teilinformationen, die unter verschiedenen Winkeln sichtbar sind, kann auch dazu genutzt werden, Bilder zu erzeugen, die dem Betrachter den Eindruck einer räumlichen Darstellung vermitteln. Dabei werden z. B. zwei unter Berücksichtigung der Augengeometrie aufgenommene Bildansichten eines Motivs unter den entsprechenden Winkeln durch das Linsenraster hindurch aufgezeichnet, so daß bei Betrachtung des Bildes ein Teilbild unter dem Betrachtungswinkel des linken Auges erscheint, während das andere unter dem Betrachtungswinkel des rechten Auges erscheint. Für den Betrachter setzen sich dann beide Teilbilder zu einem Bild mit dreidimensionaler Wirkung zusammen.

Die Aufzeichnung der Laserdaten kann in unterschiedlicher Weise erfolgen.

Als datentragende Schicht kann z. B., wie in Fig. 2 gezeigt, direkt die mit dem Sicherheitsdruckbild und eventuell weiteren Daten versehene Kartenkernschicht 6 dienen, wobei das vorzugsweise von Karte zu Karte aperiodisch gestaltete Sicherheitsdruckbild auch in den Bereich des Linsenrasters hineinragen kann. Dieses Sicherheitsdruckbild ist dort - durch das Linsenraster hindurch -zwar in nur unvollständig und verzerrten Form, jedoch unter allen Betrachtungswinkeln sichtbar.

Das Linsenraster kann in den Randbereichen auch so gestaltet werden, daß die Reliefstruktur nahezu fließend in den glatten Oberflächenbereich der Karte übergeht. Eine Herauslösung des Kippbilds und dessen Übertragung auf eine gefälschte Karte wird dadurch weiter erschwert. Im Grenzbereich vom Linsenraster und dem umliegenden, ungeprägten Kartenbereich können aber auch mittels des Lasers Muster, z. B. Guillochen, eingebracht werden, wodurch das erfindungsgemäß erstellte Kippbild mit der Karte noch zusätzlich verschmolzen wird.

Die Kernschicht ist vorzugsweise eine gefärbte Kunststoffschicht oder eine Papierschicht, die unter der Einwirkung des Laserlichts verfärbt. z. B. geschwärzt, wird.

In einer weiteren möglichen Ausführungsform wird zwischen der Kernschicht und der transparenten Deckschicht, in die das Linsenraster eingeprägt wird, eine das Laserlicht gut absorbierende, zusätzliche Datenempfangsschicht eingebracht.

Die Kernschicht wird dazu z. B. im Bereich des Linsenrasters mit geeigneten Materialien, wie Metallen, Farbschichten etc. beschichtet. Für eine Laseraufzeichnung geeignete Materialien sind z. B. aus der US-PS 4,032,691 bekannt. Weitere geeignete Stoffe auf Aluminiumbasis werden z. B. in der DE-OS 33 11 882 genannt. Diese Schichten erlauben auch unter entsprechenden Steuerung der Laserintensität die Darstellung von Motiven in unterschiedlichen Farben.

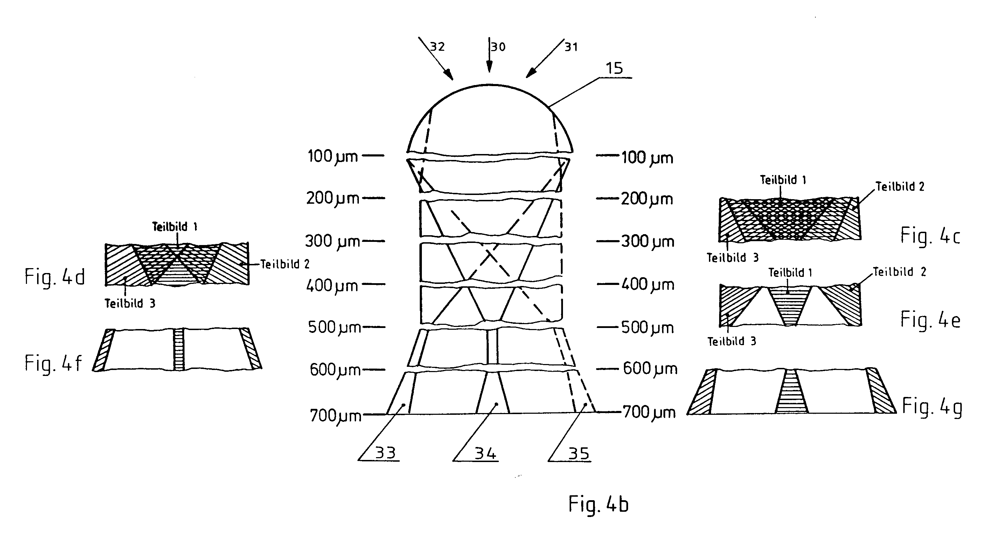

Die Fig. 4 zeigt eine besonders vorteilhafte Ausführungsform. Hier wird zwischen der Folie mit dem Linsenraster 7 und der Kernschicht 6 eine zusätzliche transparente Kunststoffschicht l6 eingebracht, die für das Licht des jeweils verwendeten Lasers ein relativ hohes Absorptionsvermögen aufweist. Derartige Kunststoffschichten sind aus der DE-PS 31 51 407 und der DE-OS 34 25 263 bekannt. Sie enthalten Zusätze, z. B. in Form von Farbstoffen, die in einer Menge eingebracht sind, die die visuelle Transparenz nahezu nicht beeinträchtigen, für den Laserstrahl aber wie Absorptionszentren wirken und eine Schwärzung in der Kunststoffolie bewirken.

Die Dicke dieser Schicht und die Dicke der laserstrahldurchlässigen Deckschicht sind so aufeinander abgestimmt, daß die Fokusebene der Linsen in den transparenten Folienbereich fällt.

Die Folie entspricht vorzugsweise den äußeren Abmaßen der Karte und ist vollflächig im Kartenverbund integriert. Wegen ihrer Transparenzeigenschaften sind die Daten und Informationen auf darunterliegenden Schichten weiterhin sichtbar. Die Folie besteht vorzugsweise aus PVC, da sie sich unter Anwendung von Wärme und Druck mit den benachbarten Schichten besonders gut verschweißen läßt. Die Folie kann auch eine Teilschicht der Deckfolie sein, die beispielsweise als Verbundfolie konzipiert wird, bestehend aus einer für Laseraufzeichnung nicht empfindlichen äußeren Schicht und einer für die Laseraufzeichnung empfindlichen inneren Schicht. Letztere kann dann, durch die andere Folie mechanisch stabilisiert, besonders dünn ausgebildet sein.

Bei Verwendung einer laserbeschriftbaren, transparenten Kunststoffolie als "Datenempfangsschicht" bilden sich bei der Beschriftung der Kunststoffolie die Pixel 17, d. h. die geschwärzten Bereiche, im Volumen der Folie je nach Tiefenlage dieser Schicht im Kartenverbund unterschiedlich aus.

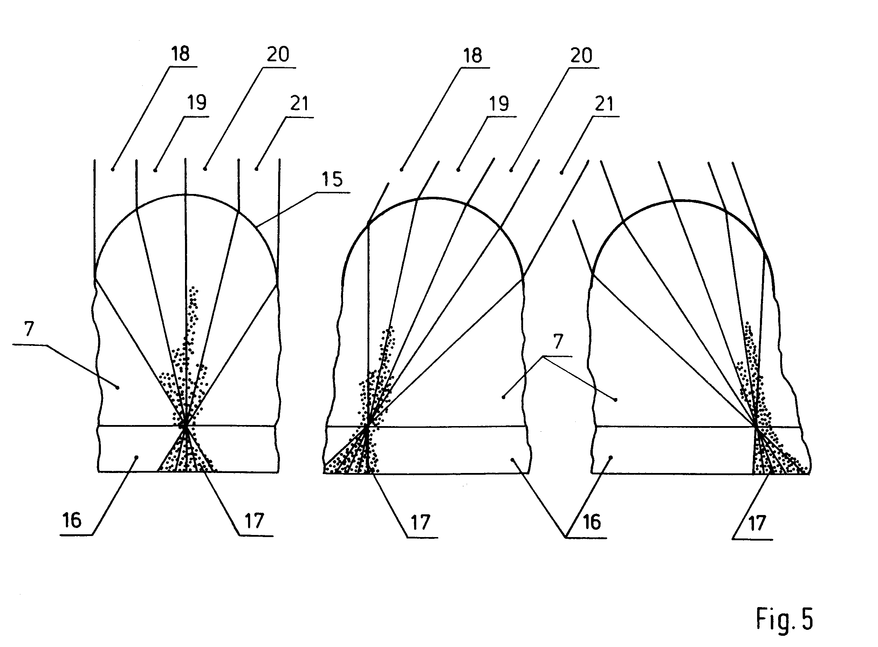

Die Fig. 4b zeigt in einer zusammenfassenden Darstellung die bei einem vorgegebenen Linsendurchmesser von 400 µ und einem Brechungsindex von 1,5 zu erwartenden Schwärzungen in einer empfindlichen Folie in Abhängigkeit deren Einlagerung in verschiedenen Tiefenbereichen. Bei Einlagerung in Oberflächennähe, hier bis zu einer Tiefe von ca. 350 µ, würden sich die unter drei verschiedenen Winkeln (30, 31, 32) eingebrachten Teilbilder bzw. die dazugehörigen Pixel (33, 34, 35) überlappen. Ab dieser Tiefe liegen die Pixel aber getrennt vor und die einzelnen Teilbilder sind ohne Beeinflussung benachbarter Pixel getrennt sichtbar (siehe Fig. 4e - g). In einer bevorzugten Ausführungsform werden Folienstärken der nicht empfindlichen, geprägten Deckfolien und der empfindlichen darunterliegenden Folie so gewählt, daß sich stäbchenförmige (Fig. 4f) oder leicht konusförmige (Fig. 4g) Pixel ausbilden, die in Richtung des eingestrahlten Laserstrahls ausgerichtet sind. Das heißt, daß bei Linsenparametern, wie in Fig. 4b gezeigt, die z. B. 100 µ dicke laserempfindliche Folie in einer Kartentiefe zwischen ca. 350 und 600 µ eingelagert wird. Die sich dabei ergebenden Teilbilder sind voneinander getrennt und somit gut getrennt sichtbar. Die Stäbchen setzen sich aus einzelnen, mikroskopisch kleinen schwarzen Bereichen zusammen, die sich aufgrund der lokal begrenzten Zersetzung des Kunststoffmaterials ausbilden. Die Stäbchen können sich auch in die Deckfolie hinein fortsetzen, wie in Fig. 4a und 5 gezeigt. Aufgrund der Nachfokussierung ist die Leistungsdichte des Laserstrahls, insbesondere in Nähe des Fokusbereichs meist ausreichend, um auch in der an sich nicht empfindlichen Deckfolie eine optische Veränderung hervorzurufen.

Beim Betrachten dieser Bilder durch die Zylinderlinsen sieht man nun unter den verschiedenen Winkeln immer senkrecht auf diese Stäbchen. Die Stäbchen sind selbst nicht voll durchgeschwärzt, aber über ihre Länge von mehreren 100 µ (abhängig von Laserpulsenergie, Linsenrasterfokus, Empfindlichkeit und Dicken der verwendeten Folien) bringen sie doch die als Schwärzung erscheinende optische Dichte auf. Aus diesem Grund sind die einzelnen Bilder auch dann deutlich sichtbar, wenn sich die Stäbchen, die zu verschiedenen Teilbildern gehören, einmal berühren sollten. Die Stärke der Schwärzung läßt sich in diesen Folien durch Steuerung der Laserintensität bzw. der Pulsleistung in einfacher und reproduzierbarer Form einstellen, so daß auch die Darstellung von Halbtonbildern möglich ist.

Die Stäbchen, die nicht zu dem jeweiligen Teilbild gehören, sind nicht in Richtung des betreffenden Blickwinkels ausgerichtet, so daß bei einer eventuell auftretenden Überlappung diese nur von der Seite betrachtet werden. Bei dieser seitlichen Betrachtung ist jedoch die optische Dichte wesentlich geringer und wirkt sich deshalb nicht als störend aus.

Bei erhöhter Laserintensität verbreitern sich die Stäbchen. Diese Verbreiterung hat zur Folge, daß die Information in einem größeren Winkelbereich sichtbar ist. Man hat damit die Möglichkeit, durch einfache Steuerung der Laserintensität Informationen einzubringen, die nur in einem schmalen Winkelbereich auslesbar sind, aber auch Informationen, die im äußersten Fall von nahezu jedem Blickwinkel aus sichtbar sind. So können z. B. diejenigen Bildteile, die allen Teilbildern gemeinsam sind, z. B. eine Einrahmung, in einem Verfahrensgang unter einem Winkel mit erhöhter Laserintensität, eingebracht werden, während die verschiedenen Teilinformationen unter den jeweiligen Winkeln mit entsprechend geringer Laserintensität eingebracht werden. Damit verringert sich, bezogen auf alle Teilbilder, die Anzahl der für die Aufzeichnung notwendigen Laserpulse und somit auch die Beschriftungszeit, die für die Ausbildung des Kippbilds notwendig ist.

Die Bildinformationen können aber auch direkt in die mit dem Linsenraster versehenen Folie eingebracht werden. Dazu wird eine Folie gewählt, die für den Laserstrahl nur schwach empfindlich ist und in der eine Schwärzung erst dann erfolgt, wenn der Laserstrahl zusätzlich, wie hier durch die Zylinderlinsen, fokussiert wird. Im Fokusbereich ist die Leistungsdichte so hoch, daß eine Zersetzung des Kunststoffmaterials erfolgt, während außerhalb des Fokus die Leistungsdichte für eine Zersetzung des Materials nicht ausreichend ist.

Für die Schwärzung von Kunststoffolien im Volumen sind in der Regel Laser mit hoher Ausgangsleistung erforderlich. Ein geeigneter Laser ist z. B. ein im Pulsbetrieb arbeitender Nd-YAG-Laser mit Spitzen-Pulsleistungen zwischen 10⁴ und 10⁵ Watt bei einer Wellenlänge von 1,064 µ.

Der Pulsbetrieb legt es nahe, die Bildinformationen in Form eines Punktrasters aufzuzeichnen, wobei jeder Rasterpunkt einem Laserimpuls entspricht. Werden die Informationen nun, wie im erfindungsgemäßen Verfahren vorgesehen, durch das Linsenraster hindurch eingebracht, so ist allgemein zu erwarten, daß die Abtastung über die einzelnen Linsen mit der Pulsfrequenz des Lasers synchronisiert werden muß, da ansonsten, je nach dem ob der Laserpuls auf die folgende Linse trifft oder nicht, Unregelmäßigkeiten im Schwärzungsgrad auftreten. Eine derartige Synchronisation wäre jedoch technisch sehr aufwendig und läßt sich, wie anschließend gezeigt wird, durch entsprechende Koordination der Parameter Strahldurchmesser, Linsenbreite, Abtastgeschwindigkeit und Pulsfrequenz umgehen (Fig. 5).

Der Laserstrahl 9 wird hierfür so dimensioniert, daß sein Durchmesser beim Auftreffen auf das Linsenraster nur einen Bruchteil der Breite der Einzelinsen 15 beträgt, bei der Einbringung von drei Kippbildern vorzugsweise kleiner als 1/3 des Linsendurchmessers. Die Abtastgeschwindigkeit und die Pulsfrequenz werden dann so gewählt, daß beim Überstreichen des Linsenrasters auf jede Linse mehrere, z. B. vier Laserimpulse 18, 19, 20, 21 treffen. Jeder Pixel 17 wird deshalb von mindestens zwei aufeinanderfolgenden Laserimpulsen erzeugt. Fällt in diesem Beispiel der jeweils erste Laserpuls l8 nicht genau auf den Linsenanfang, so wird dessen Energie auf zwei Linsen aufgeteilt und die resultierende Leistungsdichte reicht auch in der empfindlichen Schicht nicht für eine merkliche Schwärzung aus. Der zweite bzw. die nachfolgenden Pulse treffen die Linse voll und verursachen die ausreichende Schwärzung des Pixels. Auf diese Weise werden auch Moires verhindert, die bei nicht synchronisierter Aufzeichnung vorhanden sind.

Die Einbringung der Informationen mittels eines Laserstrahls durch das Linsenraster hat weiterhin den Vorteil, daß die Ansprüche an die optische Qualität des Linsenrasters nur von untergeordneter Bedeutung sind. Lokale Fehler in einzelnen Linsen, die z. B. eine gegenüber den Nachbarlinsen veränderte Ablenkung des Laserstrahls und somit eine Verschiebung des Aufzeichnungspunktes zur Folge haben, sind ohne Bedeutung, da der Lichtweg bei der Aufzeichnung und bei der späteren Betrachtung identisch ist. Aus dem gleichen Grund ist es problemlos möglich, innerhalb eines Linsenrasters Linsenform, -anordnung, -brennweiten und/oder Rasterperiode sowie weitere Parameter zu variieren.

Lokale Linsenfehler oder gezielte lokale Veränderungen leisten damit ebenfalls einen Beitrag zur Verfälschungssicherheit der Karte. Wird bei einer Manipulation das Linsenraster zerstört und durch ein neues ersetzt, so ist - selbst wenn es dem Fälscher gelingen sollte, ein ähnliches Linsenraster passergenau über den gelaserten Daten aufzubringen - die Manipulation erkennbar. Eine durch Linsenfehler bedingte Verschiebung der Aufzeichnungspunkte wird dann nicht mehr durch das ersetzte Linsenraster aufgehoben und das beobachtete Bild verliert seine ursprüngliche Schärfe. Bei Verwendung der transparenten Kunststoffschicht werden die Stäbchen dann nämlich nicht mehr exakt in ihrer Längsachse mit der maximalen optischen Dichte beobachtet, sondern in einem zur Längsachse geneigten Winkel, so daß das Bild lokale Unterschiede im Schwärzungsgrad aufweist.

Transparente Kunststoffschichten als "Datenempfangsschichten" haben gegenüber einer speziellen Beschichtung der Kernschicht den Vorteil, daß die einzelnen Kartenschichten über die gesamte Fläche im gleichen Maße homogen miteinander verschweißt sind und die Schichten nicht wieder getrennt werden können. Eine Beschichtung der Kernschicht im Linsenrasterbereich erfordert hingegen in der Regel Zusatzmaßnahmen, um auch in diesem Bereich eine feste Verbindung zwischen den einzelnen Schichten zu erreichen.

Zudem bleibt ein eventuell unter dem Linsenraster befindliches oder in dieses hineinragende Druckbild auf der Kartenkernschicht weiterhin sichtbar. Ausweiskarten werden im allgemeinen mit einem Hintergrundmuster versehen, wobei sich die Lage des Motivs aperiodisch von Karte zu Karte ändert. Erstreckt sich nun das Hintergrundmuster in den Linsenrasterbereich hinein, so verhindert auch hier bereits diese Maßnahme die erfolgreiche Übertragung eines ausgestanzten Kippbildes auf andere Karten, da die Hintergrundmuster verschiedener Karten nur in den seltensten Fällen paßgerecht vorliegen.

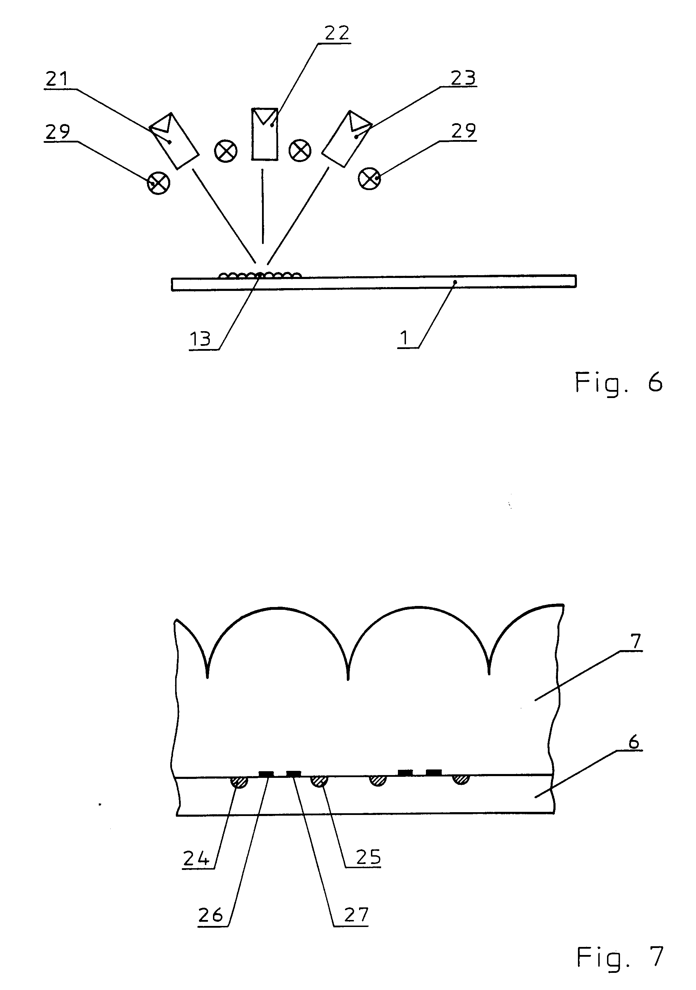

In der Fig. 6 ist eine schematische Darstellung einer Vorrichtung zur maschinellen Prüfung des erfindungsgemäßen Kippbildes gezeigt, das drei Teilbilder enthält, die in Richtung zur Kartennormalen und in Winkelabständen von ca. plus 27° und minus 27° zur Kartennormalen sichtbar sind.

Die Prüfvorrichtung weist drei Lichtdetektoren 21, 22, 23 auf, die aus mehreren einzelnen Fotodioden bestehen und eine lichtempfindliche Empfangsfläche bilden. Die Detektoren sind unter verschiedenen Winkeln (0°, + 27°, - 27°) auf das in der Karte 1 befindliche Kippbild 13 gerichtet. Über eine geeignete Blendenanordnung oder zusätzliche optische Elemente (in der Fig. nicht gezeigt) kann dafür gesorgt werden, daß die Detektoren nur das Licht aus einem schmalen Winkelbereich empfangen und das Blickfeld der Detektoren auf das in der Prüfvorrichtung befindliche Kippbild 13 begrenzt wird. In der Vorrichtung sind weiterhin Lichtquellen 29 vorgesehen, die das Kippbild beleuchten. Die von den einzelnen Fotodioden jeder Detektoranordnung erhaltenen Signale werden elektronisch aufaddiert. Da die Bildinformationen in den verschiedenen Richtungen unterschiedlich sind, erhält man somit drei unterschiedliche Meßwerte A (Detektor 21), B (Detektor 22) und C (Detektor 23). Diese Meßwerte werden in einer Datenverarbeitungseinrichtung normiert, z. B. die Quotienten A/(A + B + C), B/(A + B + C) und C/(A + B + C) ermittelt, um ein von der Gesamthelligkeit unabhängiges Signal zu erhalten. Die so erhaltenen Meßwerte werden dann mit den entsprechenden, in einem Speicher vorliegenden Werten verglichen. Da das Kippbild in zumindest einem Teilbild kartenindividuelle Informationen enthält, werden die gemessenen Werte von Bild zu Bild und von Karte zu Karte immer unterschiedlich sein. Speichert man nun die Vergleichswerte direkt auf der Karte, z. B. auf der Magnetpiste oder in Form einer anderen, maschinell lesbaren Codierungsform bekannter Art (OCR-Code, Balkencode), erhält man eine zusätzliche Anbindung dieser Werte an die Karte. Außerdem kann die Prüfung der Karte durch direkten Vergleich der gemessenen Daten mit den auf der Karte gespeicherten Daten erfolgen, wodurch zusätzliche Zentralspeicher etc. eingespart werden können.

Werden bei der Prüfung des Kippbildes nur die Teilbilder mit Standardinformationen herangezogen, so können die Vergleichswerte auch fest im Prüfgerät gespeichert sein.

Anstatt einer integralen Messung kann das Kippbild auch zeilenmäßig aus den verschiedenen Richtungen abgetastet und mit entsprechenden Werten verglichen werden. Sind die Informationen, wie z. B. die Kontonummer, in einer maschinell lesbaren Codierungsform eingebracht (z. B. in OCR-Codierung), so können die Zeichen auch direkt gelesen und somit geprüft werden.

Fig. 7 zeigt eine weitere Ausführungsform der Erfindung Hierbei sind die erfindungsgemäßen Kippbilder 24, 25 mit drucktechnisch aufgebrachten Kippbildern 26, 27 oder mit einem aus zwei Bildern bestehenden 3D-Bild kombiniert. Die Bilder 26, 27 sind derart vorgesehen, daß sie bei nahezu senkrechter Betrachtung, z. B. bei plus 8° und minus 8°, der Karte sichtbar sind. Kippt man die Karte weiter in die eine oder andere Richtung, sind die Laserkippbilder 24, 25 erkennbar. Die Kippbilder 26, 27 sind, da in üblicher Drucktechnik hergestellt, in beliebigen Farben herstellbar. Eine Variation dieser Bilder 26, 27 von Karte zu Karte ist verfahrenstechnisch ungünstig. Sinnvollerweise werden damit deshalb Informationen dargestellt, die bei allen Karten gleich sind, z. B. Logos, Jahreszahl etc. Die kartenindividuellen Daten werden in der anfangs erwähnten Lasertechnik eingebracht. Erfolgt dies in farblich kontrastierender Form, z. B. in schwarz, ist der Übergang der Bilder 26, 27 auf die Bilder 24, 25 besonders gut erkennbar.

Die Herstellung der in Fig. 7 gezeigten Karten ist ähnlich wie bei den anfangs erwähnten Karten möglich. Die Einprägung der Linsenraster erfolgt dabei ebenfalls mit Hilfe der Kaschierplatten während des Laminierprozesses. Die Bilder 26, 27 werden z. B. zusammen mit dem allgemeinen Druckbild (Hintergrundmuster, Guillochen etc.) aufgebracht. Beim Zusammenführen der Kaschierplatten mit den bedruckten Inletts (Kernschicht 6) ist lediglich darauf zu achten, daß auf dem Druckbogen vorgesehene Passermarken mit Passermarken der Kaschierplatten exakt übereinstimmen. Ist dies der Fall, sind die parallelen Linsen des Linsenrasters automatisch parallel zu den Linien der Druckbilder 26, 27. Nach dem Ausstanzen der Karten sind die Passermarken nicht mehr verfügbar, so daß dem Fälscher keine Hilfestellung geleistet wird und bei eventuellen Manipulationen unverändert die anfangs erwähnten Probleme bestehen.

Das Druckbild kann aber auch vor der Kartenherstellung auf die später innenliegende Oberfläche der Deckfolie aufgedruckt werden und das Linsenraster registergenau zum Druckbild eingeprägt werden oder es kann auch umgekehrt (Prägen - Drucken) vorgegangen werden.

Die in Fig. 7 dargestellte Karte hat den weiteren Vorteil, daß unterschiedliche Technologien (Lasertechnik und Drucktechnik) in einem visuell prüfbaren Kartenmerkmal vereinigt sind, die die Variationsvielfalt einerseits und den Fälschungsschutz andererseits weiter erhöhen.

Allerdings ist bei dieser Ausführungsform zu berücksichtigen, daß das Druckbild nur dann "kippt", wenn es in der Fokusebene der Linsen des Linsenrasters oder zumindest in deren Nähe angeordnet ist. Die Dicke der Deckfolie bzw. die Lage des Druckbilds ist daher entsprechend der Brennweite der Linsen zu wählen. Des weiteren ist darauf zu achten, daß eine sich in der Deckfolie fortsetzende, durch den Laserstrahl bewirkte Schwärzung das drucktechnisch erzeugte Druckbild nicht überschattet. Derartige Probleme können auch durch Verwendung relativ unempfindlichen Deckfolienmaterials, geringer Laserintensitäten, eventuell in Kombination mit einer Beschichtung des Kartenkerns mit laserempfindlichem Material, umgangen werden.

Verwendet man hingegen einen Kartenaufbau, wie in Fig. 4 gezeigt, bei dem die Laseraufzeichnung im Volumen einer transparenten Kunststoffschicht erfolgt, ist das Einbringen eines zusätzlichen, mit drucktechnischen Mitteln erzeugten Kippbild gegebenenfalls dadurch möglich, daß das Druckbild zwischen die transparenten Folien eingebracht wird. Um wärmebedingte kaschiertechnische Probleme und weitere Probleme, die eventuell bei der registergenauen Einbringung des Linsenrasters zum Druckbild entstehen können, zu umgehen, kann die Deckfolie mit dem Linsenraster auch vorgefertigt werden, das Druckbild in Ausrichtung zum Linsenraster auf deren gegenüberliegende Seite aufgedruckt und die Folie im Kaltkaschierverfahren unter Verwendung geeigneter, gut haftender, die Belaserung aber nicht beeinflussender, Klebemittel mit den übrigen Kartenschichten verbunden werden.

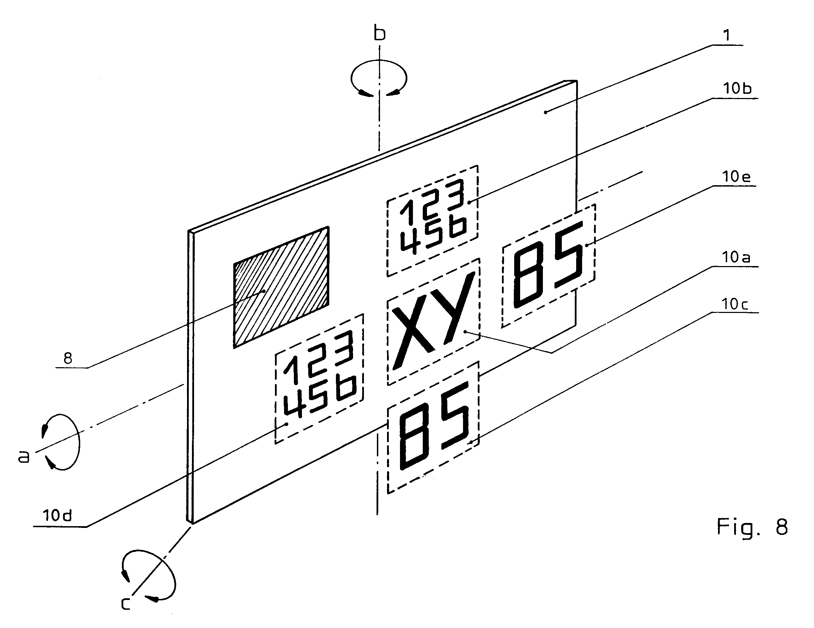

Eine hohe Fälschungssicherheit wird aber erst durch die Verwendung eines Lasers zur Aufzeichnung des Kippbilds erreicht, insbesondere in Kombination mit der Aufzeichnung im Volumen transparenter Kartenschichten, denn erst dadurch bietet sich die Möglichkeit, eine einfache Herstellung gleichzeitig mit hohem Fälschungs- und Verfälschungsschutz zu koppeln. Folgende Aspekte sind für die Fälschungssicherheit sowie die Fertigungstechnik besonders wertvoll:
- Die mit der Lasersteuerung einfach zu realisierende Einbringung kartenindividueller Daten, die die Übertragung eines Kippbilds von einer echten auf eine falsche Karte sinnlos machen.
- Die gleichzeitige Einbringung der Daten in mehrere Schichtbereiche und zwar verfahrenstechnisch bedingt passergenau, so daß Manipulationen, bei denen die Kartenschichten getrennt werden, um sich einen Zugang zu den Daten zu verschaffen, sofort erkannt werden.
- Die Einbringung der Informationen unterhalb des Linsenrasters ohne jegliche Passerprobleme, wobei dies in der bereits fertiggestellten Karte erfolgen kann.
- Die durch den Laser bewirkte irreversible Veränderung des Kartenmaterials, wodurch eine spätere Änderung, d. h. eine Verfälschung der Daten nicht mehr möglich ist.
- Die problemlose Verwendung auffälliger und unüblicher Linsenraster, z. B. einer Kombination von Zylinder- und Kugellinsen. Durch die Kugellinsen kann beispielsweise der Randbereich des Kippbildes dekorativ und auffällig gestaltet werden. Der Fälscher, der eine Eindrucksfälschung herstellen will, wird dadurch gezwungen, sich für jeden Kartentyp ein spezielles Prägeraster herzustellen; er kann nicht auf die bekannten Postkarten mit Linsenraster-Kippbild zurückgreifen. Schon der Aufwand für die Nachbildung des unüblichen und auffälligen Linsenrasters ist daher eine wirksame Schwelle gegen Nachahmungen.
- Die Verwendung von Linsenrastern mit Linsen unterschiedlicher Brennweite, wodurch sich unüberwindliche Probleme bei der Erzeugung von Nachbildungen mit drucktechnischen oder fotografischen Mitteln ergeben. Der Kippeffekt ist bei diesen Nachahmungen nämlich nur dann vorhanden, wenn die Aufzeichnung der Teilbilder in die Fokusebene der Linsen zu liegen kommt. Der Fälscher wird deshalb gezwungen, die Aufzeichnung der Teilbilder in einer 3-dimensionalen Form auszuführen. Da das mittels Laser erzeugte Kippbild aber vorzugsweise in Form stäbchenförmigen Volumenelementen aufgezeichnet wird, existiert bei ihm diese Schwierigkeit bei der Aufzeichnung durch Linsenraster mit unterschiedlichen Brennweiten nicht. Wegen der Stäbchengeometrie kippen übrigens auch die Bereiche unter den Kugellinsen nur senkrecht zur Aufzeichnungsrichtung.
- Die Möglichkeit, bei geeigneter Wahl der Aufzeichnungsgeometrie und Anordnung oder Form des Linsenrasters einen Kippeffekt, d. h. einen Wechsel der Informationen beim Kippen der Karte, zu erreichen, der nicht nur beim Drehen der Karte um eine einzige vorbestimmte Drehachse beobachtbar ist, sondern auch bei Drehung der Karte um andere Drehachsen. In der Fig. 8 ist z. B. ein Linsenraster gezeigt, bei dem die Zylinderlinsen unter einem Winkel von 45° zur Kartenlängsachse verlaufen. Die Teilbilder (10a,b,c) werden durch zeilenweise Abtastung des Linsenrasterbereichs 8 der Karte eingebracht, wobei die Abtastung in Richtung einer Kante der Karte erfolgt. Die verschiedenen Teilbilder werden wie oben beschrieben, bei verschiedenen Aufzeichnungswinkeln eingebracht. Bei der hier gezeigten Anordnung überstreicht aber der Laserstrahl bei der Aufzeichnung die Zylinderlinsen nicht senkrecht zu deren Längsachsen, sondern unter einem Winkel von 45°. Die so eingebrachten Teilbilder sind dann bei Drehung der Karte sowohl um deren Längs- und Querachse (a,b) als auch um eine zur Kartendiagonalen kollinaer und zu den Linsenlängsachsen senkrecht verlaufender Achse alternierend sichtbar.
   Ein derartiger Effekt wird erreicht, sobald der Laserstrahl nicht mehr im rechten Winkel zu den Zylinderlängsachsen über das Linsenraster geführt wird, sondern unter einem Winkel zwischen 10° und 80°, wobei, wie in dem in Fig 8 gezeigten Beispiel, insbesondere bei einem Winkel von 45° die unter den verschiedenen Betrachtungsrichtungen sichtbaren Teilbilder 10 a - e scharf voneinander getrennt beobachtbar sind. Da es nicht erforderlich ist, die Linsen exakt unter 45° zur Abtastrichtung auszurichten, können zur Erzielung des gleichen Effekts auch geschwungene, bogenförmige oder ähnlich verlaufende Zylinderlinsen oder andere Linsenformen verwendet werden. Des weiteren ist es möglich, die Linsen in verschiedenen Teilbereichen des Linsenrasters unterschiedlich, z. B. in Form eines Fischgrätenmusters auszurichten.

All diese Punkte tragen einzeln bzw. in Kombination dazu bei, in einfacher Weise Datenträger, wie z. B. Ausweiskarten, mit einem einfach prüfbaren, schwer bis nahezu nicht nachahmbaren und kopier- oder fototechnisch nicht nachbildbarem Echtheitsmerkmal zu versehen. Als besonders vorteilhaft wirkt sich aber dabei aus, daß durch die erfindungsgemäße Lösung ein einfacher Weg aufgezeigt wird, Standardinformationen (Logo, Hoheitszeichen, etc.) fest mit kartenindividuellen Informationen (Foto, Kontonummer, etc.) zu verknüpfen. In gleicher Weise können noch weitere Daten, wie z. B. der Gültigkeitszeitraum oder bestimmte, die Serie von Karten kennzeichnende, Information, mit einbezogen werden.

## Patentansprüche (Patentansprüche für folgende(n) Vertragsstaat(en): AT, BE, CH, DE, FR, GB, IT, LI, LU, NL, SE)

1. Datenträger, bei dem in einem inneren Volumenbebereich Informationen mittels eines Laserstrahls eingebracht sind, die in Form von Änderungen der optischen Eigenschaften aufgrund einer irreversiblen, durch den Laserstrahl bewirkten Materialveränderung sichtbar sind, dadurch **gekennzeichnet,** daß der Datenträger mindestens eine transparente Kunststoffschicht (7) enthält, die zumindest in einem Teilbereich mit einem Oberflächenrelief in Form eines Linsenrasters (15) versehen ist, daß zumindest ein Teil der mittels des Laserstrahls eingebrachten Informationen durch dieses Linsenraster hindurch eingebracht sind, daß sich die Änderung der optischen Eigenschaften auf Bereiche (Pixel) begrenzt, deren radiale Ausdehnung kleiner ist als der Durchmesser einer einzelnen Linse, und daß die Informationen, die unter Verwendung von Laserstrahlen aus wenigstens zwei verschiedenen Richtungen im Linsenrasterbereich aufgezeichnet wurden, unter denselben Richtungen in begrenzten Winkelbereichen gelesen und/oder meßtechnisch erfaßt werden können.

2. Datenträger, bei dem in einem inneren Volumenbereich Informationen mittels eines Laserstsrahls eingebracht sind, die in Form von Änderungen der optischen Eigenschaften aufgrund einer irreversiblen, durch den Laserstrahl bewirkten Materialveränderung sichtbar sind, dadurch **gekennzeichnet,** daß der Datenträger mindestens eine transparente Kunststoffschicht (7) enthält, die zumindest in einem Teilbereich mit einem Oberflächenrelief in Form eines Linsenrasters versehen ist, wobei die Rasterperiode des Linsenrasters gleich dem Linsendurchmesser bzw. der Linsenbreite ist, daß zumindest ein Teil der mittels des Laserstrahls eingebrachten Informationen durch dieses Linsenraster hindurch eingebracht sind, daß sich die Änderung der optischen Eigenschaften auf Bereiche (Pixel) begrenzt, deren radiale Ausdehnung kleiner ist als der Durchmesser einer einzelnen Linse, und daß die unter Verwendung von Laserstrahlen im Linsenrasterbereich vorgesehenen Informationen unter einem begrenzten Winkelbereich gelesen und/oder meßtechnisch erfaßt werden können.

3. Datenträger nach Anspruch 2, dadurch **gekennzeichnet,** daß unter dem Linsenraster mehrere, unter verschiedenen Winkeln auslesbare Informationen (10a, 10b, 10c) aufgezeichnet sind.

4. Datenträger nach Anspruch 1 oder 2, dadurch **gekennzeichnet,** daß das Linsenraster aus Zylinderlinsen besteht.

5. Datenträger nach Anspruch 1 oder 2, dadurch **gekennzeichnet,** daß das Linsenraster aus Kugellinsen besteht.

6. Datenträger nach Anspruch 1 oder 2, dadurch **gekennzeichnet,** daß das Linsenraster aus einer Mischung von Zylinder- und Kugellinsen besteht.

7. Datenträger nach Anspruch 1 und 4, dadurch **gekennzeichnet,** daß die unter dem Linsenraster aufgezeichneten Daten (10a, 10b, 10c) in Form eines Mischbildes vorliegen, welches derart aus Pixeln besteht, daß parallel zu Linsenlängsachsen verlaufende linienhafte Pixelfolgen zu einem Teilbild gehören und benachbarte Pixel senkrecht zu Linsenlängsachsen zu einem anderen Teilbild gehören.

8. Datenträger nach Anspruch 3 und 4, dadurch **gekennzeichnet,** daß die unter dem Linsenraster aufgezeichneten Daten (10a, 10b, 10c) in Form eines Mischbildes vorliegen, welches derart aus Pixeln besteht, daß parallel zu Linsenlängsachsen verlaufende linienhafte Pixelfolgen zu einem Teilbild gehören und benachbarte Pixel senkrecht zu Linsenlängsachsen zu einem anderen Teilbild gehören.

9. Datenträger nach Anspruch 1 oder 3, dadurch **gekennzeichnet,** daß die Informationen (10a, 10b, 10c) Standardinformationen wie Logo, Gültigkeitszeichen, etc. sowie datenträgerindividuelle Daten wie Kontonummer, Kartennummer, etc. sind.

10. Datenträger nach Anspruch 1 oder 2, dadurch **gekennzeichnet,** daß mit Hilfe entsprechend breiter Pixel, die in einem größeren Winkelbereich sichtbar sind Informationsdetails so eingebracht sind, daß diese in verschiedenen Winkelbereichen auslesbar sind.

11. Datenträger nach Anspruch 1 oder 2, dadurch **gekennzeichnet,** daß zwischen der das Oberflächenrelief (15) tragenden Folie (7) und einer Kernschicht (6) eine transparente, laserbeschriftbare Folie (12) vorgesehen ist.

12. Datenträger nach Anspruch 11, dadurch **gekennzeichnet,** daß die Folien (7, 12) als Verbundfolie ausgebildet sind.

13. Datenträger nach Anspruch 11, dadurch **gekennzeichnet,** daß die laserbeschriftbare Folie (12) mit Farbstoffen versetzt ist, die in der Folienmasse gleichmäßig verteilt sind.

14. Datenträger nach Anspruch 11 oder 12, dadurch **gekennzeichnet,** daß die optischen Änderungen in Volumenbereichen der transparenten Folien in Form stäbchenförmiger, in Strahlrichtung ausgerichteter Pixel vorliegen.

15. Datenträger nach Anspruch 6, dadurch **gekennzeichnet,** daß die Linsen in Form eines Musters angeordnet sind, das taktil und visuell erkennbar ist.

16. Datenträger nach Anspruch 1 oder 2, dadurch **gekennzeichnet,** daß die Linsen des Linsenrasters unterschiedliche Brennweiten besitzen.

17. Datenträger nach Anspruch 1, dadurch **gekennzeichnet,** daß die Rasterperiode des Linsenrasters größer ist als der Linsendurchmesser

18. Datenträger nach Anspruch 1 oder 2, dadurch **gekennzeichnet,** daß die Rasterperiode in verschiedenen Teilbereichen des Linsenrasters unterschiedlich ist.

19. Datenträger nach Anspruch 1 oder 2, dadurch **gekennzeichnet,** daß das Linsenraster zumindest teilweise aus Zylinderlinsen mit nicht geradlinig verlaufender Zylinderachse besteht.

20. Datenträger nach Anspruch 1 oder 2, dadurch **gekennzeichnet,** daß die Scheitel der nebeneinander angeordneten Linsen bezogen auf die Oberfläche des Datenträgers in unterschiedlichen Höhen liegen.

21. Datenträger nach Anspruch 1 oder 2, dadurch **gekennzeichnet,** daß die Linsen (15) einen Linsendurchmesser zwischen 150 µ und 500 µ aufweisen.

22. Datenträger nach Anspruch 1 oder 2, dadurch **gekennzeichnet,** daß eine Oberflächenprägung im Übergangsbereich zwischen Linsenraster und nichtgeprägter Datenträgeroberfläche vorhanden ist.

23. Datenträger nach Anspruch 22, dadurch **gekennzeichnet,** daß das Linsenraster kontinuierlich in die Oberflächenprägung übergeht.

24. Datenträger nach Anspruch 1 oder 2, dadurch **gekennzeichnet,** daß im Randbereich des Linsenrasters ein mittels eines Lasers aufgezeichnetes Muster, z. B. eine Guilloche, vorgesehen ist.

25. Datenträger nach Anspruch 1 oder 2, dadurch **gekennzeichnet,** daß zumindest in einem Teilbereich des Oberflächenreliefs (15) weitere drucktechnisch aufgebrachte Informationen vorgesehen sind.

26. Datenträger nach Anspruch 25, dadurch **gekennzeichnet,** daß die drucktechnisch aufgebrachten Informationen ein aperiodisches Hintergrundmuster sind.

27. Datenträger nach Anspruch 26, dadurch **gekennzeichnet,** daß sich das Hintergrundmuster in den Bereichen des Datenträgers außerhalb des Linsenrasterbereichs fortsetzt.

28. Datenträger nach Anspruch 25 oder 26, dadurch **gekennzeichnet,** daß das Hintergrundmuster ein sicherheitstechnisch hochwertiges Muster, vorzugsweise ein Guillochmuster, ist.

29. Datenträger nach Anspruch 25, dadurch **gekennzeichnet,** daß die drucktechnisch aufgebrachten Informationen (26, 27) bezüglich der Lage und Form der Linsen des Linsenrasters so aufgebracht sind, daß diese Informationen nur in engbegrenzten Winkelbereichen sichtbar sind.

30. Datenträger nach Anspruch 29, dadurch **gekennzeichnet,** daß diese Information zwei unter Berücksichtigung der Augengeometrie entsprechend gestaltete und dem Linsenraster angepaßte Bilder enthalten, die bei gleichzeitiger Betrachtung einen dreidimensionalen Eindruck bewirken.

31. Verfahren zur Einbringung von Informationen in einen Datenträger, bestehend aus einer Trägerschicht und einer transparenten Kunststoffschicht, mittels eines Laserstrahls, dadurch **gekennzeichnet,** daß
- die transparente Kunststoffschicht zumindest in einem Teilbereich mit einem Oberflächenrelief in Form eines Linsenrasters versehen wird
- zumindest ein Teil der Informationen durch das Linsenraster hindurch unter vorgegebenen Winkeln mittels des Laserstrahls eingebracht werden, wobei
- der Laserstrahl in innenliegenden Volumenbereichen des Datenträgers irreversible, optisch erkennbare Änderungen hervorruft und
- diese Änderungen auf im Vergleich zum Linsendurchmesser bzw. der Linsenbreite enge Bereiche begrenzt sind,
- die Informationen mit Laserstahlen aus wenigstens zwei verschiedenen Richtungen eingebracht werden und unter denselben Richtungen in begrenzten Winkelbereichen auslesbar sind.

32. Verfahren zur Einbringung von Informationen in einen Datenträger, bestehend aus einer Trägerschicht und einer transparenten Kunststoffschicht, mittels eines Laserstrahls, dadurch **gekennzeichnet,** daß
- die transparente Kunststoffschicht zumindest in einem Teilbereich mit einem Oberflächenrelief in Form eines Linsenrasters versehen wird, wobei die Rasterperiode des Linsenrasters gleich dem Linsendurchmesser ist
- zumindest ein Teil der Informationen durch das Linsenraster hindurch unter vorgegebenen Winkeln mittels des Laserstrahls eingebracht wird, wobei
- der Laserstrahl in innenliegenden Volumenbereichen des Datenträgers irreversible, optisch erkennbare Änderungen hervorruft und
- diese Änderungen auf im Vergleich zum Linsendurchmesser bzw. der Linsenbreite enge Bereiche begrenzt sind,
- Die Informationen unter einem oder mehreren Winkelbereichen derart eingebracht werden, daß sie im wesentlichen unter den gleichen Winkelbereichen auslesbar sind.

33. Verfahren nach Anspruch 31 oder 32, dadurch **gekennzeichnet,** daß ein Linsenraster bestehend aus mehreren Zylinder- und/oder Kugellinsen eingebracht wird.

34. Verfahren nach Anspruch 32, dadurch **gekennzeichnet**, daß mit dem Laser unter verschiedenen Beschriftungswinkeln unterschiedliche Informationen eingeschrieben werden.

35. Verfahren nach Anspruch 31 oder 34, dadurch **gekennzeichnet,** daß der Beschriftungswinkel dadurch geändert wird, daß der Datenträger um den entsprechenden Winkel zur optischen Achse gedreht wird.

36. Verfahren nach Anspruch 31 oder 34, dadurch **gekennzeichnet,** daß der Beschriftungswinkel dadurch geändert wird, daß der Laserstrahl über Prismen geleitet wird und die Anordnung der Prismen den Beschriftungswinkel bestimmt.

37. Verfahren nach Anspruch 33, dadurch **gekennzeichnet,** daß der Laserstrahl senkrecht oder unter einem Winkel zwischen 10° und 80°, vorzugsweise 45°, zum Verlauf der Zylinderlinsen über das Linsenraster geführt wird.

38. Verfahren nach Anspruch 31 oder 34, dadurch **gekennzeichnet,** daß eine erste Information mit senkrecht zur Datenträger-Oberfläche (= 0°) auftreffenden Laserstrahlen, eine zweite unter einem Winkel zwischen plus 10° bis plus 35° auftreffenden Laserstrahlen und eine dritte unter einem Winkel zwischen minus 10° bis minus 35° eingebracht wird.

39. Verfahren nach Anspruch 31 oder 34, dadurch **gekennzeichnet,** daß mit dem Laser mehrere Informationen unter gleichen Winkelabstandsschritten eingebracht werden und die Informationen derart in Beziehung zueinander stehen, daß beim Kippen der Karte die Informationen quasi kontinuierlich ineinander übergehen.

40. Verfahren nach Anspruch 31 oder 32, dadurch **gekennzeichnet,** daß die Informationen im Punktscan-Verfahren eingebracht werden und sich die Informationen aus Einzelelementen, sogenannten Pixeln, zusammensetzen.

41. Verfahren nach Anspruch 40, dadurch **gekennzeichnet,** daß die Abtastgeschwindigkeit und die Pulsfrequenz des Lasers derart aufeinander abgestimmt sind, daß beim Überstreichen des Linsenrasters auf jede Linse pro Pixel mehrere Laserpulse treffen.

42. Verfahren nach Ansprüche 40 oder 41, dadurch **gekennzeichnet,** daß der Schichtaufbau und die dabei verwendeten Materialien so gewählt werden, daß die optischen Änderungen in Volumenbereichen der transparenten Schichtbereiche des Datenträgers bewirkt werden, wobei sich stäbchenförmige Pixel ausbilden.

43. Verfahren nach Anspruch 42, dadurch **gekennzeichnet,** daß die Pulsleistung des Laserstrahlschreibers derart eingestellt wird, daß sich die stäbchenförmigen Pixel in ihrem Volumen nur geringfügig überlagern.

44. Verfahren nach Anspruch 42, dadurch **gekennzeichnet,** daß mit dem Laser zusätzlich Informationen eingebracht werden, bei denen der radiale Durchmesser der Pixel durch entsprechende Steuerung der Laserpulsleistung so stark verbreitert wird, daß der Pixel in einem großen Winkelbereich und gegebenenfalls unter allen Beobachtungsrichtungen erkennbar ist.

45. Verfahren nach Anspruch 31 oder 32, dadurch **gekennzeichnet,** daß im Bereich des Oberflächenreliefs zusätzlich zu den mit dem Laserstrahlschreiber einzuschreibenden Informationen weitere drucktechnische Informationen vorgesehen werden, die im Zusammenwirken mit dem Linsenraster so angeordnet und gestaltet werden, daß zumindest Teile dieser Informationen ebenfalls nur in bestimmten engbegrenzten Winkelbereichen sichtbar sind.

46. Verfahren zur Prüfung eines Datenträgers nach Anspruch 1 oder 2, dadurch **gekennzeichnet,** daß
- der Datenträger im Bereich des Linsenrasters aus unterschiedlichen Winkelbereichen beleuchtet wird,
- das von dem Datenträgerbereich, in dem das Linsenraster liegt, remittierte Licht von mehreren Detektoren ausgewertet wird, die jeweils nur Licht eines bestimmten Winkelbereichs erfassen,
- die von den Detektoren erhaltenen Signale einer Datenverarbeitungseinrichtung zugeführt, dort aufbereitet und mit gespeicherten Werten verglichen werden.

47. Verfahren nach Anspruch 46, dadurch **gekennzeichnet,** daß der Datenträger im Linsenrasterbereich zeilenweise unter den verschiedenen Winkeln abgetastet wird.

48. Verfahren nach Anspruch 46, dadurch **gekennzeichnet,** daß
- das unter den verschiedenen Winkeln remittierte Licht integral über den gesamten Linsenrasterbereich erfaßt wird,
- winkelspezifische Integralmeßwerte gebildet werden,
- diese Meßwerte durch Quotientenbildung normiert werden und
- die normierten Werte mit gespeicherten Werten verglichen werden.

## Patentansprüche (Patentansprüche für folgende(n) Vertragsstaat(en): ES)

1. Datenträger, bei dem in einem inneren Volumenbereich Informationen mittels eines Laserstrahls eingebracht sind, die in Form von Änderungen der optischen Eigenschaften aufgrund einer irreversiblen, durch den Laserstrahl bewirkten Materialveränderung sichtbar sind, dadurch **gekennzeichnet,** daß der Datenträger mindestens eine transparente Kunststoffschicht (7) enthält, die zumindest in einem Teilbereich mit einem Oberflächenrelief in Form eines Linsenrasters (15) versehen ist, daß zumindest ein Teil der mittels des Laserstrahls eingebrachten Informationen durch dieses Linsenraster hindurch eingebracht sind, daß sich die Änderung der optischen Eigenschaften auf Bereiche (Pixel) begrenzt, deren radiale Ausdehnung kleiner ist als der Durchmesser einer einzelnen Linse, so daß diese, aufgrund der optischen Wirkung der Linsen, nur in begrenzten Winkelbereichen sichtbar sind und daß zusammengehörige, sich über den Linsenrasterbereich erstreckende Informationen, die unter Verwendung von Laserstrahlen aus einem begrenzten Winkelbereich aufgezeichnet werden, anschließend unter demselben begrenzten Winkelbereich gelesen und/oder meßtechnisch erfaßt werden können.

2. Datenträger nach Anspruch 1, dadurch **gekennzeichnet,** daß unter dem Linsenraster mehrere, unter verschiedenen Winkeln auslesbare Informationen (10a, 10b, 10c) aufgezeichnet sind.

3. Datenträger nach Anspruch 1, dadurch **gekennzeichnet,** daß das Linsenraster aus Zylinderlinsen besteht.

4. Datenträger nach Anspruch 1, dadurch **gekennzeichnet,** daß das Linsenraster aus Kugellinsen besteht.

5. Datenträger nach Anspruch 1, dadurch **gekennzeichnet,** daß das Linsenraster aus einer Mischung von Zylinder- und Kugellinsen besteht.

6. Datenträger nach Anspruch 2 und 3, dadurch **gekennzeichnet,** daß die unter dem Linsenraster aufgezeichneten Daten (10a, 10b, 10c) in Form eines Mischbildes vorliegen, welches derart aus Pixeln besteht, daß parallel zu Linsenlängsachsen verlaufende linienhafte Pixelfolgen zu einem Teilbild gehören und benachbarte Pixel senkrecht zu Linsenlängsachsen zu einem anderen Teilbild gehören.

7. Datenträger nach Anspruch 2, dadurch **gekennzeichnet,** daß die Informationen (10a, 10b, 10c) Standardinformationen wie Logo, Gültigkeitszeichen, etc. sowie datenträgerindividuelle Daten wie Kontonummer, Kartennummer, etc. sind.

8. Datenträger nach Anspruch 1, dadurch **gekennzeichnet,** daß mit Hilfe entsprechend breiter Pixel, die in einem größeren Winkelbereich sichtbar sind, Informationsdetails so eingebracht sind, daß diese in verschiedenen Richtungen auslesbar sind.

9. Datenträger nach Anspruch 1, dadurch **gekennzeichnet,** daß zwischen der das Oberflächenrelief (15) tragenden Folie (7) und einer Kernschicht (6) eine transparente, laserbeschriftbare Folie (12) vorgesehen ist.

10. Datenträger nach Anspruch 9, dadurch **gekennzeichnet,** daß die Folien (7, 12) als Verbundfolie ausgebildet sind.

11. Datenträger nach Anspruch 9, dadurch **gekennzeichnet,** daß die laserbeschriftbare Folie (12) mit Farbstoffen versetzt ist, die in der Folienmasse gleichmäßig verteilt sind.

12. Datenträger nach Anspruch 9 oder 10, dadurch **gekennzeichnet,** daß die optischen Änderungen in Volumenbereichen der transparenten Folien in Form stäbchenförmiger, in Strahlrichtung ausgerichteter Pixel vorliegen.

13. Datenträger nach Anspruch 5, dadurch **gekennzeichnet,** daß die Linsen in Form eines Musters angeordnet sind, das taktil und visuell erkennbar ist.

14. Datenträger nach Anspruch 1, dadurch **gekennzeichnet,** daß die Linsen des Linsenrasters unterschiedliche Brennweiten besitzen.

15. Datenträger nach Anspruch 1, dadurch **gekennzeichnet,** daß die Rasterperiode des Linsenrasters größer oder gleich dem Linsendurchmesser ist.

16. Datenträger nach Anspruch 1, dadurch **gekennzeichnet,** daß die Rasterperiode in verschiedenen Teilbereichen des Linsenrasters unterschiedlich ist.

17. Datenträger nach Anspruch 1, dadurch **gekennzeichnet,** daß das Linsenraster zumindest teilweise aus Zylinderlinsen mit nicht geradlinig verlaufender Zylinderachse besteht.

18. Datenträger nach Anspruch 1, dadurch **gekennzeichnet,** daß die Scheitel der nebeneinander angeordneten Linsen bezogen auf die Oberfläche des Datenträgers in unterschiedlichen Höhen liegen.

19. Datenträger nach Anspruch 1, dadurch **gekennzeichnet,** daß die Linsen (15) einen Linsendurchmesser zwischen 150 µ und 500 µ aufweisen.

20. Datenträger nach Anspruch 1, dadurch **gekennzeichnet,** daß eine Oberflächenprägung im Übergangsbereich zwischen Linsenraster und nichtgeprägter Datenträgeroberfläche vorhanden ist.

21. Datenträger nach Anspruch 20, dadurch **gekennzeichnet,** daß das Linsenraster kontinuierlich in die Oberflächenprägung übergeht.

22. Datenträger nach Anspruch 1, dadurch **gekennzeichnet,** daß im Randbereich des Linsenrasters ein mittels eines Lasers aufgezeichnetes Muster, z. B. eine Guilloche, vorgesehen ist.

23. Datenträger nach Anspruch 1, dadurch **gekennzeichnet,** daß zumindest in einem Teilbereich des Oberflächenreliefs (15) weitere drucktechnisch aufgebrachte Informationen vorgesehen sind.

24. Datenträger nach Anspruch 23, dadurch **gekennzeichnet,** daß die drucktechnisch aufgebrachten Informationen ein aperiodisches Hintergrundmuster sind.

25. Datenträger nach Anspruch 24, dadurch **gekennzeichnet,** daß sich das Hintergrundmuster in den Bereichen des Datenträgers außerhalb des Linsenrasterbereichs fortsetzt.

26. Datenträger nach Anspruch 23 oder 24, dadurch **gekennzeichnet,** daß das Hintergrundmuster ein sicherheitstechnisch hochwertiges Muster, vorzugsweise ein Guillochmuster, ist.

27. Datenträger nach Anspruch 23, dadurch **gekennzeichnet,** daß die drucktechnisch aufgebrachten Informationen (26, 27) bezüglich der Lage und Form der Linsen des Linsenrasters so aufgebracht sind, daß diese Informationen nur in engbegrenzten Winkelbereichen sichtbar sind.

28. Datenträger nach Anspruch 27, dadurch **gekennzeichnet,** daß diese Information zwei unter Berücksichtigung der Augengeometrie entsprechend gestaltete und dem Linsenraster angepaßte Bilder enthalten, die bei gleichzeitiger Betrachtung einen dreidimensionalen Eindruck bewirken.

29. Verfahren zur Einbringung von Informationen in einen Datenträger, bestehend aus einer Trägerschicht und einer transparenten Kunststoffschicht, mittels eines Laserstrahls, dadurch **gekennzeichnet,** daß
- die transparente Kunststoffschicht zumindest in einem Teilbereich mit einem Oberflächenrelief in Form eines Linsenrasters versehen wird
- zumindest ein Teil der Informationen durch das Linsenraster hindurch unter einen vorgegebenen Winkel mittels des Laserstrahls eingebracht werden, wobei
- der Laserstrahl in einem innenliegenden Volumenbereich des Datenträgers eine irreversible, optisch erkennbare Änderung hervorruft und
- diese Änderung auf einen, bezogen auf den Linsendurchmesser, engeren Bereich begrenzt ist, so daß diese Informationen nur in begrenzten Winkelbereichen wieder auslesbar sind, die im wesentlichen den Winkelbereichen entsprechen, unter denen die Informationen mittels des Laserstrahls eingebracht wurden.

30. Verfahren nach Anspruch 29, dadurch **gekennzeichnet,** daß ein Linsenraster bestehend aus mehreren Zylinder- und/oder Kugellinsen eingebracht wird.

31. Verfahren nach Anspruch 29, dadurch **gekennzeichnet,** daß mit dem Laser unter verschiedenen Beschriftungswinkeln unterschiedliche Informationen eingeschrieben werden.

32. Verfahren nach Anspruch 31, dadurch **gekennzeichnet,** daß der Beschriftungswinkel dadurch geändert wird, daß der Datenträger um den entsprechenden Winkel zur optischen Achse gedreht wird.

33. Verfahren nach Anspruch 31, dadurch **gekennzeichnet,** daß der Beschriftungswinkel dadurch geändert wird, daß der Laserstrahl über Prismen geleitet wird und die Anordnung der Prismen den Beschriftungswinkel bestimmt.

34. Verfahren nach Anspruch 30, dadurch **gekennzeichnet,** daß der Laserstrahl senkrecht oder unter einem Winkel zwischen 10° und 80°, vorzugsweise 45°, zum Verlauf der Zylinderlinsen über das Linsenraster geführt wird.

35. Verfahren nach Anspruch 31, dadurch **gekennzeichnet,** daß eine erste Information mit senkrecht zur Datenträger-Oberfläche (= 0°) auftreffenden Laserstrahlen, eine zweite unter einem Winkel zwischen plus 10° bis plus 35° auftreffenden Laserstrahlen und eine dritte unter einem Winkel zwischen minus 10° bis minus 35° eingebracht wird.

36. Verfahren nach Anspruch 31, dadurch **gekennzeichnet,** daß mit dem Laser mehrere Informationen unter gleichen Winkelabstandsschritten eingebracht werden und die Informationen derart in Beziehung zueinander stehen, daß beim Kippen der Karte die Informationen quasi kontinuierlich ineinander übergehen.

37. Verfahren nach Anspruch 29, dadurch **gekennzeichnet,** daß die Informationen im Punktscan-Verfahren eingebracht werden und sich die Informationen aus Einzelelementen, sogenannten Pixeln, zusammensetzen.

38. Verfahren nach Anspruch 37, dadurch **gekennzeichnet,** daß die Abtastgeschwindigkeit und die Pulsfrequenz des Lasers derart aufeinander abgestimmt sind, daß beim Überstreichen des Linsenrasters auf jede Linse pro Pixel mehrere Laserpulse treffen.

39. Verfahren nach Ansprüche 37 oder 38, dadurch **gekennzeichnet,** daß der Schichtaufbau und die dabei verwendeten Materialien so gewählt werden, daß die optischen Änderungen in Volumenbereichen der transparenten Schichtbereiche des Datenträgers bewirkt werden, wobei sich stäbchenförmige Pixel ausbilden.

40. Verfahren nach Anspruch 39, dadurch **gekennzeichnet,** daß die Pulsleistung des Laserstrahlschreibers derart eingestellt wird, daß sich die stäbchenförmigen Pixel in ihrem Volumen nur geringfügig überlagern.

41. Verfahren nach Anspruch 39, dadurch **gekennzeichnet,** daß mit dem Laser zusätzlich Informationen eingebracht werden, bei denen der radiale Durchmesser der Pixel durch entsprechende Steuerung der Laserpulsleistung so stark verbreitert wird, daß der Pixel in einem großen Winkelbereich und gegebenenfalls unter allen Beobachtungsrichtungen erkennbar ist.

42. Verfahren nach Anspruch 29, dadurch **gekennzeichnet,** daß im Bereich des Oberflächenreliefs zusätzlich zu den mit dem Laserstrahlschreiber einzuschreibenden Informationen weitere drucktechnische Informationen vorgesehen werden, die im Zusammenwirken mit dem Linsenraster so angeordnet und gestaltet werden, daß zumindest Teile dieser Informationen ebenfalls nur in bestimmten engbegrenzten Winkelbereichen sichtbar sind.

43. Verfahren zur Prüfung eines Datenträgers nach Anspruch 1, dadurch **gekennzeichnet,** daß
- der Datenträger im Bereich des Linsenrasters aus unterschiedlichen Winkelbereichen beleuchtet wird,
- das von dem Datenträgerbereich, in dem das Linsenraster liegt, remittierte Licht von mehreren Detektoren ausgewertet wird, die jeweils nur Licht eines bestimmten Winkelbereichs erfassen
- die von den Detektoren erhaltenen Signale einer Datenverarbeitungseinrichtung zugeführt, dort aufbereitet und mit gespeicherten Werten verglichen werden.

44. Verfahren nach Anspruch 43, dadurch **gekennzeichnet,** daß der Datenträger im Linsenrasterbereich zeilenweise unter den verschiedenen Winkeln abgetastet wird.

45. Verfahren nach Anspruch 43, dadurch **gekennzeichnet,** daß
- das unter den verschiedenen Winkeln remittierte Licht integral über den gesamten Linsenrasterbereich erfaßt wird,
- winkelspezifische Integralmeßwerte gebildet werden,
- diese Meßwerte durch Quotientenbildung normiert werden und
- die normierten Werte mit gespeicherten Werten verglichen werden.

## Claims (Claims for the following Contracting State(s): AT, BE, CH, DE, FR, GB, IT, LI, LU, NL, SE)

1. A data carrier wherein information is provided by means of a laser beam in an inside volume area, said information being visible in the form of changes in the optical properties due to an irreversible change of material caused by the laser beam, **characterized** in that the data carrier contains at least one transparent synthetic layer (7) provided at least in one area with a surface relief in the form of a lenticular screen (15), at least part of the information provided by the laser beam is provided through this lenticular screen, the change in the optical properties is limited to areas (pixels) whose radial extent is smaller than the diameter of an individual lens, and the information that was recorded in the lenticular screen area using laser beams from at least two different directions can be read and/or detected by measuring techniques at the same directions in limited angle ranges.

2. A data carrier wherein information is provided by means of a laser beam in an inside volume area, said information being visible in the form of changes in the optical properties due to an irreversible change of material caused by the laser beam, **characterized** in that the data carrier contains at least one transparent synthetic layer (7) provided at least in one area with a surface relief in the form of a lenticular screen, the screen period of the lenticular screen being equal to the lens diameter or lens width, at least part of the information provided by the laser beam is provided through this lenticular screen, the change in the optical properties is limited to areas (pixels) whose radial extent is smaller than the diameter of an individual lens, and the information provided in the lenticular screen area using laser beams can be read and/or detected by measuring techniques at a limited angle range.

3. The data carrier of claim 2, **characterized** in that several pieces of information (10a, 10b, 10c) capable of being read out at different angles are recorded below the lenticular screen.

4. The data carrier of claim 1 or 2, **characterized** in that the lenticular screen consists of cylinder lenses.

5. The data carrier of claim 1 or 2, **characterized** in that the lenticular screen consists of spherical lenses.

6. The data carrier of claim 1 or 2, **characterized** in that the lenticular screen consists of a mixture of cylinder and spherical lenses.

7. The data carrier of claims 1 and 4, **characterized** in that the data (10a, 10b, 10c) recorded below the lenticular screen are present in the form of a mixed image consisting of pixels in such a way that linear pixel sequences extending parallel to the longitudinal axes of the lenses belong to one partial image and adjacent pixels at right angles to longitudinal axes of the lenses belong to a different partial image.

8. The data carrier of claims 3 and 4, **characterized** in that the data (10a, 10b, 10c) recorded below the lenticular screen are present in the form of a mixed image consisting of pixels in such a way that linear pixel sequences extending parallel to the longitudinal axes of the lenses belong to one partial image and adjacent pixels at right angles to longitudinal axes of the lenses belong to a different partial image.

9. The data carrier of claims 1 or 3, **characterized** in that the pieces of information (10a, 10b, 10c) are standard information such as logos, marks of validity, etc., and data specific to the data carrier such as an account number, card number, etc.

10. The data carrier of claim 1 or 2, **characterized** in that information details can be provided in such a way, with the aid of suitably wide pixels which are visible in a larger angle range, that these details can be read out in different directions.

11. The data carrier of claim 1 or 2, **characterized** in that a transparent film (12) capable of being written on by a laser is provided between the film (7) bearing the surface relief (15) and a core layer (6).

12. The data carrier of claim 11, **characterized** in that the films (7, 12) are designed as a compound film.

13. The data carrier of claim 11, **characterized** in that the film (12) capable of being written on by a laser has dyes mixed therein which are evenly distributed in the film mass.

14. The data carrier of claim 11 or 12, **characterized** in that the optical changes in volume areas of the transparent films are present in the form of rod-shaped pixels oriented in the direction of the beam.

15. The data carrier of claim 6, **characterized** in that the lenses are disposed in the form of a pattern which is recognizable tactilely and visually.

16. The data carrier of claim 1 or 2, **characterized** in that the lenses of the lenticular screen have different focal lengths.

17. The data carrier of claim 1, **characterized** in that the screen period of the lenticular screen is greater than the lens diameter.

18. The data carrier of claim 1 or 2, **characterized** in that the screen period is different in different areas of the lenticular screen.

19. The data carrier of claim 1 or 2, **characterized** in that the lenticular screen consists at least partially of cylinder lenses having nonstraight cylinder axes.

20. The data carrier of claim 1 or 2, **characterized** in that the apexes of the lenses disposed side by side are at different heights relative to the surface of the data carrier.

21. The data carrier of claim 1 or 2, **characterized** in that the lenses (15) have a lens diameter between 150µ and 500µ.

22. The data carrier of claim 1 or 2, **characterized** in that a surface imprinting is present in the transitional area between the lenticular screen and the unimprinted data carrier surface.

23. The data carrier of claim 22, **characterized** in that the lenticular screen runs continuously into the surface imprinting.

24. The data carrier of claim 1 or 2, **characterized** in that a pattern, e.g. a guilloche, recorded by means of a laser is provided in the edge area of the lenticular screen.

25. The data carrier of claim 1 or 2, **characterized** in that further information provided by printing techniques is provided at least in one area of the surface relief (15).

26. The data carrier of claim 25, **characterized** in that the information provided by printing techniques is an aperiodic background pattern.

27. The data carrier of claim 26, **characterized** in that the background pattern continues in the areas of the data carrier outside the lenticular screen area.

28. The data carrier of claim 25 or 26, **characterized** in that the background pattern is a high-security pattern, preferably a guilloche pattern.

29. The data carrier of claim 25, **characterized** in that the information (26, 27) provided by printing techniques is provided, in terms of the position and shape of the lenses in the lenticular screen, in such a way that it is visible only in very limited angle ranges.

30. The data carrier of claim 29, **characterized** in that this information contains two images designed in accordance with the eye geometry and adapted to the lenticular screen which arouse a three-dimensional impression when viewed simultaneously.

31. A method for providing information in a data carrier comprising a carrier layer and a transparent synthetic layer by means of a laser beam, **characterized** in that
- the transparent synthetic layer is provided at least in one area with a surface relief in the form of a lenticular screen
- at least part of the information is provided by the laser beam through the lenticular screen at predetermined angles, whereby
- the laser beam causes irreversible, optically recognizable changes in inside volume areas of the data carrier, and
- these changes are limited to narrow areas compared to the lens diameter or lens width
- this information is provided with laser beams from at least two different directions and can be read out in limited angle areas in the same directions.

32. A method for providing information in a data carrier comprising a carrier layer and a transparent synthetic layer by means of a laser beam, **characterized** in that
- the transparent synthetic layer is provided at least in one area with a surface relief in the form of a lenticular screen, the screen period of the lenticular screen being equal to the lens diameter
- at least part of the information is provided by the laser beam through the lenticular screen at predetermined angles, whereby
- the laser beam causes irreversible, optically recognizable changes in inside volume areas of the data carrier, and
- these changes are limited to narrow areas compared to the lens diameter or lens width
- this information is provided in one or more angle areas in such a way that it can be read out substantially in the same angle ranges.

33. The method of claim 31 or 32, **characterized** in that a lenticular screen comprising a plurality of cylinder and/or spherical lenses is provided.

34. The method of claim 32, **characterized** in that different information is inscribed by the laser at different writing angles.

35. The method of claim 31 or 34, **characterized** in that the writing angle is changed by rotating the data carrier by the corresponding angle to the optical axis.

36. The method of claim 31 or 34, **characterized** in that the writing angle is changed by directing the laser beam across prisms and by the arrangement of the prisms determining the writing angle.

37. The method of claim 33, **characterized** in that the laser beam is directed across the lenticular screen at right angles or at an angle between 10° and 80°, preferably 45°, to the path of the cylinder lenses.

38. The method of claim 31 or 34, **characterized** in that a first piece of information is provided with laser beams hitting the data carrier surface at right angles (= 0°), a second is provided with laser beams incident at an angle between plus 10° and plus 35°, and a third is provided at an angle between minus 10° and minus 35°.

39. The method of claim 31 or 34, **characterized** in that several pieces of information are provided by the laser with the same angular distance steps and the pieces of information have a relationship to each other such that they run into each other quasi continuously when the card is tilted.

40. The method of claim 31 or 32, **characterized** in that the information is provided by the point scanning method and the information is composed of individual elements, so-called pixels.

41. The method of claim 40, **characterized** in that the scanning speed and the pulse frequency of the laser are coordinated with each other in such a way that, when sweeping over the lenticular screen, a plurality of laser pulses hits each lens per pixel.

42. The method of claim 40 or 41, **characterized** in that the layer structure and the materials used therefor are selected in such a way that the optical changes are effected in volume areas of the transparent layer areas of the data carrier, whereby rod-shaped pixels form.

43. The method of claim 42, **characterized** in that the pulse power of the laser beam recorder is adjusted in such a way that the rod-shaped pixels overlap each other only slightly in their volume.

44. The method of claim 42, **characterized** in that the laser is additionally used to provide information in which the radial diameter of the pixels is widened to such an extent by appropriate control of the laser pulse power that the pixel is recognizable in a large angle range and optionally in all viewing directions.

45. The method of claim 31 or 32, **characterized** in that in the area of the surface relief, in addition to the information to be inscribed by the laser beam recorder, further printed information is provided which is disposed and designed in cooperation with the lenticular screen in such a way that at least parts of this information are also visible only in certain very limited angle ranges.

46. A method for testing the data carrier of claim 1 or 2, **characterized** by
- illuminating the data carrier in the area of the lenticular screen in different angle ranges,
- evaluating the light remitted from the data carrier area in which the lenticular screen is located by a plurality of detectors each of which detects light only in one certain angle range,
- feeding the signals obtained from the detectors to a data processing means where they are processed and compared with stored values.

47. The method of claim 46, **characterized** in that the data carrier is scanned in the lenticular screen area line by line at the various angles.

48. The method of claim 46, **characterized** in that
- the light remitted at the various angles is detected integrally over the entire lenticular screen area,
- angle-specific integral measured values are formed,
- these measured values are standardized by quotient formation, and
- the standardized values are compared with stored values.

## Claims (Claims for the following Contracting State(s): ES)

1. A data carrier wherein information is provided by means of a laser beam in an inside volume area, said information being visible in the form of changes in the optical properties due to an irreversible change of material caused by the laser beam, **characterized** in that the data carrier contains at least one transparent synthetic layer (7) provided at least in one area with a surface relief in the form of a lenticular screen (15), at least part of the information provided by the laser beam is provided through this lenticular screen, the change in the optical properties is limited to areas (pixels) whose radial extent is smaller than the diameter of an individual lens so that they are only visible in limited angle ranges due to the optical effect of the lenses, and pieces of information which belong together and extend over the lenticular screen area, and are recorded using laser beams from a limited angle range, can then be read and/or detected by measuring techniques in the same limited angle range.

2. The data carrier of claim 1, **characterized** in that several pieces of information (10a, 10b, 10c) capable of being read out at different angles are recorded below the lenticular screen.

3. The data carrier of claim 1, **characterized** in that the lenticular screen consists of cylinder lenses.

4. The data carrier of claim 1, **characterized** in that the lenticular screen consists of spherical lenses.

5. The data carrier of claim 1, **characterized** in that the lenticular screen consists of a mixture of cylinder and spherical lenses.

6. The data carrier of claims 2 and 3, **characterized** in that the data (10a, 10b, 10c) recorded below the lenticular screen are present in the form of a mixed image consisting of pixels in such a way that linear pixel sequences extending parallel to the longitudinal axes of the lenses belong to one partial image and adjacent pixels at right angles to longitudinal axes of the lenses belong to a different partial image.

7. The data carrier of claim 2, **characterized** in that the pieces of information (10a, 10b, 10c) are standard information such as logos, marks of validity, etc., and data specific to the data carrier such as an account number, card number, etc.

8. The data carrier of claim 1, **characterized** in that information details can be provided in such a way, with the aid of suitably wide pixels which are visible in a larger angle range, that these details can be read out in different directions.

9. The data carrier of claim 1, **characterized** in that a transparent film (12) capable of being written on by a laser is provided between the film (7) bearing the surface relief (15) and a core layer (6).

10. The data carrier of claim 9, **characterized** in that the films (7, 12) are designed as a compound film.

11. The data carrier of claim 9, **characterized** in that the film (12) capable of being written on by a laser has dyes mixed therein which are evenly distributed in the film mass.

12. The data carrier of claim 9 or 10, **characterized** in that the optical changes in volume areas of the transparent films are present in the form of rod-shaped pixels oriented in the direction of the beam.

13. The data carrier of claim 5, **characterized** in that the lenses are disposed in the form of a pattern which is recognizable tactilely and visually.

14. The data carrier of claim 1, **characterized** in that the lenses of the lenticular screen have different focal lengths.

15. The data carrier of claim 1, **characterized** in that the screen period of the lenticular screen is greater than or equal to the lens diameter.

16. The data carrier of claim 1, **characterized** in that the screen period is different in different areas of the lenticular screen.

17. The data carrier of claim 1, **characterized** in that the lenticular screen consists at least partially of cylinder lenses having nonstraight cylinder axes.

18. The data carrier of claim 1, **characterized** in that the apexes of the lenses disposed side by side are at different heights relative to the surface of the data carrier.

19. The data carrier of claim 1, **characterized** in that the lenses (15) have a lens diameter between 150µ and 500µ.

20. The data carrier of claim 1, **characterized** in that a surface imprinting is present in the transitional area between the lenticular screen and the unimprinted data carrier surface.

21. The data carrier of claim 20, **characterized** in that the lenticular screen runs continuously into the surface imprinting.

22. The data carrier of claim 1, **characterized** in that a pattern, e.g. a guilloche, recorded by means of a laser is provided in the edge area of the lenticular screen.

23. The data carrier of claim 1, **characterized** in that further information provided by printing techniques is provided at least in one area of the surface relief (15).

24. The data carrier of claim 23, **characterized** in that the information provided by printing techniques is an aperiodic background pattern.

25. The data carrier of claim 24, **characterized** in that the background pattern continues in the areas of the data carrier outside the lenticular screen area.

26. The data carrier of claim 23 or 24, **characterized** in that the background pattern is a high-security pattern, preferably a guilloche pattern.

27. The data carrier of claim 23, **characterized** in that the information (26, 27) provided by printing techniques is provided, in terms of the position and shape of the lenses in the lenticular screen, in such a way that it is visible only in very limited angle ranges.

28. The data carrier of claim 27, **characterized** in that this information contains two images designed in accordance with the eye geometry and adapted to the lenticular screen which arouse a three-dimensional impression when viewed simultaneously.

29. A method for providing information in a data carrier comprising a carrier layer and a transparent synthetic layer by means of a laser beam, **characterized** by
- providing the transparent synthetic layer at least in one area with a surface relief in the form of a lenticular screen
- providing at least part of the information by the laser beam through the lenticular screen at a predetermined angle, whereby
- the laser beam causes an irreversible, optically recognizable change in an inside volume area of the data carrier, and
- this change is limited to an area narrower than the lens diameter so that this information can only be read out again in very limited angle ranges corresponding substantially to the angle ranges at which the information was provided by the laser beam.

30. The method of claim 29, **characterized** in that a lenticular screen comprising a plurality of cylinder and/or spherical lenses is provided.

31. The method of claim 29, **characterized** in that different information is inscribed by the laser at different writing angles.

32. The method of claim 31, **characterized** in that the writing angle is changed by rotating the data carrier by the corresponding angle to the optical axis.

33. The method of claim 31, **characterized** in that the writing angle is changed by directing the laser beam across prisms and by the arrangement of the prisms determining the writing angle.

34. The method of claim 30, **characterized** in that the laser beam is directed across the lenticular screen at right angles or at an angle between 10° and 80°, preferably 45°, to the path of the cylinder lenses.

35. The method of claim 31, **characterized** in that a first piece of information is provided with laser beams hitting the data carrier surface at right angles (= 0°), a second is provided with laser beams incident at an angle between plus 10° and plus 35°, and a third is provided at an angle between minus 10° and minus 35°.

36. The method of claim 31, **characterized** in that several pieces of information are provided by the laser with the same angular distance steps and the pieces of information have a relationship to each other such that they run into each other quasi continuously when the card is tilted.

37. The method of claim 29, **characterized** in that the information is provided by the point scanning method and the information is composed of individual elements, so-called pixels.

38. The method of claim 37, **characterized** in that the scanning speed and the pulse frequency of the laser are coordinated with each other in such a way that, when sweeping over the lenticular screen, a plurality of laser pulses hits each lens per pixel.

39. The method of claim 37 or 38, **characterized** in that the layer structure and the materials used therefor are selected in such a way that the optical changes are effected in volume areas of the transparent layer areas of the data carrier, whereby rod-shaped pixels form.

40. The method of claim 39, **characterized** in that the pulse power of the laser beam recorder is adjusted in such a way that the rod-shaped pixels overlap each other only slightly in their volume.

41. The method of claim 39, **characterized** in that the laser is additionally used to provide information in which the radial diameter of the pixels is widened to such an extent by appropriate control of the laser pulse power that the pixel is recognizable in a large angle range and optionally in all viewing directions.

42. The method of claim 29, **characterized** in that in the area of the surface relief, in addition to the information to be inscribed by the laser beam recorder, further printed information is provided which is disposed and designed in cooperation with the lenticular screen in such a way that at least parts of this information are also visible only in certain very limited angle ranges.

43. A method for testing the data carrier of claim 1, **characterized** by
- illuminating the data carrier in the area of the lenticular screen in different angle ranges,
- evaluating the light remitted from the data carrier area in which the lenticular screen is located by a plurality of detectors each of which detects light only in one certain angle range,
- feeding the signals obtained from the detectors to a data processing means where they are processed and compared with stored values.

44. The method of claim 43, **characterized** in that the data carrier is scanned in the lenticular screen area line by line at the various angles.

45. The method of claim 43, **characterized** in that
- the light remitted at the various angles is detected integrally over the entire lenticular screen area,
- angle-specific integral measured values are formed,
- these measured values are standardized by quotient formation, and
- the standardized values are compared with stored values.

## Revendications (Revendications pour l'(les) Etat(s) contractant(s) suivant(s): AT, BE, CH, DE, FR, GB, IT, LI, LU, NL, SE)

1. Support de données, dans lequel des informations sont inscrites dans la zone d'un volume interne au moyen d'un faisceau laser, les informations étant rendues visibles en forme de changement des caractéristiques optiques à cause de changements irréversibles réalisés sur le matériau par un faisceau laser, caractérisé en ce que le support de données comporte au moins une couche transparente faite en matière plastique qui est munie, au moins dans une zone partielle, d'un relief superficiel en forme d'un réseau de lentilles (15), en ce qu'au moins une partie des informations inscrites au moyen du faisceau laser sont introduites à travers ce réseau de lentilles, en ce que le changement des caractéristiques optiques est limité à des zones (pixels) dont l'extension radiale est inférieure au diamètre d'une lentille unique, et en ce que les informations qui ont été inscrites par l'application de rayons laser sont disposées selon au moins deux directions différentes dans la région du réseau de lentilles, peuvent être lues et/ou captées par mesures techniques selon ces mêmes directions dans des zones angulaires limitées.

2. Support de données, dans lequel des informations sont inscrites dans la zone d'un volume interne au moyen d'un faisceau laser, les informations étant visibles en forme de changements des caractéristiques optiques basés sur un changement irréversible réalisé par un faisceau laser, caractérisé en ce que le support de données comporte au moins une couche en matière plastique transparente qui est munie, au moins dans une zone partielle, d'un relief superficiel en forme d'un réseau de lentilles, le pas du réseau de lentilles étant égal au diamètre ou à la largeur des lentilles, en ce qu'au moins une partie des informations inscrites au moyen du faisceau laser sont introduites à travers ce réseau de lentilles, en ce que le changement des caractéristiques optiques est limité à des zones (pixels) dont l'extension radiale est inférieure au diamètre d'une lentille individuelle, et en ce que les informations prévues dans la zone du réseau de lentilles suite à l'utilisation de faisceaux laser peuvent être lues et/ou saisies ou captées par les mesures techniques selon une zone angulaire limitée.

3. Support de données selon la revendication 2, caractérisé en ce qu'une pluralité d'informations (10a, 10b, 10c) susceptibles d'être lues sous différents angles sont enregistrées grâce au réseau de lentilles.

4. Support de données selon la revendication 1 ou 2, caractérisé en ce que le réseau de lentilles est composé de lentilles cylindriques.

5. Support de données selon la revendication 1 ou 2, caractérisé en ce que le réseau de lentilles est composé de lentilles sphériques.

6. Support de données selon la revendication 1 ou 2, caractérisé en ce que le réseau de lentilles est composé d'un mélange de lentilles cylindriques et de lentilles sphériques.

7. Support de données selon la revendication 1 et 4, caractérisé en ce que les données (10a, 10b, 10c) enregistrées grâce au réseau de lentilles sont en forme d'une image composite faite de pixels de sorte que des suites de pixels disposées parallèlement à une ligne qui borde les axes longitudinaux des lentilles appartiennent à une partie d'image et les pixels voisins, qui sont perpendiculaires aux axes longitudinaux des lentilles, appartiennent à une autre partie d'image.

8. Support de données selon la revendication 3 et 4, caractérisé en ce que les données (10a, 10b, 10c) enregistrées sous le réseau de lentilles sont en forme d'une image composite faite de pixels de sorte que des suites de pixels disposées parallèlement à une ligne qui longe les axes longitudinaux des lentilles appartiennent à une partie d'image et les pixels voisins, qui sont perpendiculaires aux axes longitudinaux des lentilles, appartiennent à une autre partie d'image.

9. Support de données selon la revendication 1 ou 3, caractérisé en ce que les informations (10a, 10b, 10c) sont des informations standards telles que logo, insignes de validité, etc., ainsi que données qui sont particulières au support de données en question telles que numéro de compte, numéro de carte, etc.

10. Support de données selon la revendication 1 ou 2, caractérisé en ce que, à l'aide de pixels d'une largeur correspondante, qui sont visibles dans une plus grande zone angulaire, des détails d'informations sont introduits d'une telle façon que lesdites informations peuvent être lues selon différentes zones angulaires.

11. Support de données selon la revendication 1 ou 2, caractérisé en ce qu'une feuille transparente (12) accessible à une écriture au moyen d'un laser est disposée entre la feuille (7) qui porte le relief superficiel (15), et une couche de coeur (6).

12. Support de données selon la revendication 11, caractérisé en ce que les feuilles (7, 12) sont réalisées en forme de feuilles de liaison.

13. Support de données selon la revendication 11, caractérisé en ce que la feuille (12) accessible à une écriture par un rayon laser est imprégnée de colorants qui sont distribués uniformément dans la masse de la feuille.

14. Support de données selon la revendication 11 ou 12, caractérisé en ce que les changements optiques dans les zones de volume de la feuille transparente existent en forme de pixels, conformés comme de petits bâtonnets orientés selon la direction du faisceau.

15. Support de données selon la revendication 6, caractérisé en ce que les lentilles sont disposées en forme d'un modèle susceptible d'être reconnu par voie tactile et visuelle.

16. Support de données selon la revendication 1 ou 2, caractérisé en ce que les lentilles du réseau de lentilles possèdent différentes distances focales.

17. Support de données selon la revendication 1, caractérisé en ce que le pas du réseau de lentilles est supérieur au diamètre des lentilles.

18. Support de données selon la revendication 1 ou 2, caractérisé en ce que le pas du réseau est différent dans différentes zones partielles du réseau de lentilles.

19. Support de données selon la revendication 1 ou 2, caractérisé en ce que le réseau de lentilles comprend au moins partiellement des lentilles cylindriques, l'axe du cylindre n'étant pas disposé selon une ligne droite.

20. Support de données selon la revendication 1 ou 2, caractérisé en ce que les sommets des lentilles disposées les unes à côté des autres sont placés à différentes hauteurs par rapport à la surface du support de données.

21. Support de données selon la revendication 1 ou 2, caractérisé en ce que les lentilles (15) ont un diamètre de lentille entre 150 µm et 500 µm.

22. Support de données selon la revendication 1 ou 2, caractérisé en ce qu'une impression superficielle est présente dans la zone de transition entre le réseau de lentilles et la surface du support de données dépourvue d'impression en relief.

23. Support de données selon la revendication 22, caractérisé en ce qu'il y a une transition continue entre le réseau de lentilles et l'impression en relief de surface.

24. Support de données selon la revendication 1 ou 2, caractérisé en ce qu'un modèle, par exemple un ornement en guilloche, enregistré par laser est disposé dans la zone de bord du réseau de lentilles.

25. Support de données selon la revendication 1 ou 2, caractérisé en ce que des informations supplémentaires, réalisées par des techniques d'impression, sont prévues au moins dans une zone partielle du relief superficiel (15).

26. Support de données selon la revendication 25, caractérisé en ce que les informations introduites par des techniques d'impression sont un modèle de fond dépourvu de période.

27. Support de données selon la revendication 26, caractérisé en ce que le modèle de fond se prolonge dans des zones du support de données externes à la région du réseau de lentilles.

28. Support de données selon la revendication 25 ou 26, caractérisé en ce que le modèle de fond est un modèle de grande valeur du point de vue de la sécurité, de préférence un modèle en guilloche.

29. Support de données selon la revendication 25, caractérisé en ce que les informations (26, 27) appliquées par des techniques d'impression sont introduites par rapport à la position et la forme des lentilles du réseau de lentilles, que lesdites informations ne sont visibles que selon des zones angulaires strictement limitées.

30. Support de données selon la revendication 29, caractérisé en ce que lesdites informations comprennent deux images formées en prenant en compte la géométrie de l'oeil et adaptées au réseau de lentilles qui, quand elles sont regardées simultanément, créent une impression tridimensionnelle.

31. Procédé pour l'introduction d'informations dans un support de données composé d'une couche support et d'une couche transparente en matière plastique, au moyen d'un faisceau laser, caractérisé en ce que:
- la couche transparente en matière plastique est munie, au moins dans une zone partielle, d'un relief superficiel en forme de réseau de lentilles;
- au moins une partie des informations sont introduites à travers le réseau de lentilles sous des angles prédéterminés, au moyen du faisceau laser, d'une telle manière que:
. le faisceau laser donne lieu à des changements irréversibles et optiquement identifiables dans des zones de volume à l'intérieur du support de données; et
. ces changements soient limités à des zones étroites par rapport au diamètre ou à la largeur des lentilles;
- les informations sont introduites au moyen de rayons laser venant d'au moins deux directions différentes et sont lisibles dans les mêmes directions selon des intervalles angulaires limités.

32. Procédé pour l'introduction d'informations dans un support de données composé d'une couche support et d'une couche en matière plastique transparente, au moyen d'un faisceau laser, caractérisé en ce que:
- la couche transparente en matière plastique est munie, au moins dans une zone partielle, d'un relief superficiel en forme de réseau de lentilles, le pas du réseau de lentilles étant égal au diamètre des lentilles;
- au moins une partie des informations sont introduites à travers le réseau de lentilles sous des angles prédéterminées, au moyen du faisceau laser, d'une telle manière que:
. le faisceau laser donne lieu à des changements irréversibles et identifiables optiquement dans des zones de volume à l'intérieur du support de données; et
. les changements sont limités à des zones étroites par rapport au diamètre ou à la largeur des lentilles;
- les informations sont introduites selon un ou plusieurs intervalles angulaires de telle manière qu'elles soient lisibles sensiblement selon les mêmes intervalles angulaires.

33. Procédé selon la revendication 31 ou 32, caractérisé en ce qu'un modèle composé de lentilles consistant d'une pluralité de lentilles en forme de cylindre et/ou de sphère est introduit.

34. Procédé selon la revendication 32, caractérisé en ce que différentes informations sont inscrites avec le laser selon différents angles d'écriture.

35. Procédé selon la revendication 31 ou 34, caractérisé en ce que l'angle d'écriture est changeable en faisant tourner le support de données selon un angle correspondant par rapport à l'axe optique.

36. Procédé selon la revendication 31 ou 34, caractérisé en ce que l'angle d'écriture est changeable en dirigeant le faisceau laser dans des prismes, la disposition des prismes déterminant l'angle d'écriture.

37. Procédé selon la revendication 33, caractérisé en ce que le faisceau laser balaie le réseau de lentilles verticalement ou selon un angle entre 10 et 80°, de préférence 45°, par rapport au sens des lentilles cylindriques.

38. Procédé selon la revendication 31 ou 34, caractérisé en ce qu'une première information est introduite au moyen du faisceau laser dirigé perpendiculairement à la surface du support de données (= 0°), une deuxième information étant introduite selon un angle entre plus 10° jusqu'à plus 35° et une troisième information étant introduite au moyen de faisceaux laser dirigés selon un angle entre moins 10° jusqu'à moins 35°.

39. Procédé selon la revendication 31 ou 34, caractérisé en ce que plusieurs informations sont introduites au moyen du laser selon les mêmes pas angulaires et en ce que les informations se trouvent dans un rapport l'un à l'autre tel que, lors d'une inclinaison de la carte, les informations passent de l'une à l'autre d'une manière quasi-continue.

40. Procédé selon la revendication 31 ou 32, caractérisé en ce que les informations sont introduites selon le procédé dit "palpage ponctuel" et en ce que les informations sont composées d'éléments individuels, appelés communément des pixels.

41. Procédé selon la revendication 40, caractérisé en ce que la vitesse de balayage et la fréquence d'impulsions du laser sont accordées l'une par rapport à l'autre de telle manière que, lors du balayage du réseau de lentilles, plusieurs impulsions laser frappent chaque lentille par pixel.

42. Procédé selon la revendication 40 ou 41, caractérisé en ce que la construction par couche du support et les matériaux utilisés sont choisis de telle manière que les changements optiques se produisent dans des zones de volume des régions en forme de couches transparentes du support de données, de manière à créer des pixels en forme de bâtonnets.

43. Procédé selon la revendication 42, caractérisé en ce que la puissance impulsionnelle du dispositif d'écriture inscription à faisceau laser est réglée de telle manière que les pixels en forme de bâtonnets ne se recouvrent, en ce qui concerne le volume, que très légèrement.

44. Procédé selon la revendication 42, caractérisé en ce qu'au moyen du laser, des informations supplémentaires sont introduites pour lesquelles le diamètre radial des pixels est élargi, suite à une commande correspondante de la puissance d'impulsion du laser, au point que les pixels soient susceptibles d'être reconnus sur un grand intervalle angulaire et éventuellement sous toutes les directions d'observation.

45. Procédé selon la revendication 31 ou 32, caractérisé en ce que, dans la zone du relief superficiel, en plus des informations à inscrire au moyen du dispositif d'écriture à faisceau laser, des informations supplémentaires réalisées par des techniques d'impression sont prévues qui, en coopération avec le modèle composé de lentilles, sont disposées et réalisées d'une telle façon qu'au moins des parties de ces informations ne sont également visibles que selon certains intervalles angulaires fortement limités.

46. Procédé pour la vérification d'un support de données selon la revendication 1 ou 2, caractérisé en ce que:
- le support de données est illuminé dans la région du modèle composé de lentilles selon des intervalles angulaires différents;
- la lumière qui est renvoyée de la région du support de données où se trouve le modèle composé de lentilles est évaluée par plusieurs détecteurs qui, dans chaque cas, ne détectent que la lumière correspondant à un intervalle angulaire déterminé;
- les signaux reçus des détecteurs sont envoyés à un dispositif de traitement de données où elles sont traitées et comparées avec des valeurs stockées en mémoire.

47. Procédé selon la revendication 46, caractérisé en ce que le support de données est analysé ligne par ligne sous différents angles dans la région du réseau de lentilles.

48. Procédé selon la revendication 46, caractérisé en ce que:
- la lumière renvoyée selon les différents angles est détectée intégralement sur la totalité de la région du réseau de lentilles;
- des valeurs de mesure intégrales qui sont spécifiques à chaque angle sont générées;
- lesdites valeurs de mesure sont normées en prenant des quotients; et
- les valeurs normées sont comparées avec des valeurs stockées en mémoire.

## Revendications (Revendications pour l'(les) Etat(s) contractant(s) suivant(s): ES)

1. Support de données, dans lequel des informations sont inscrites dans la zone d'un volume interne au moyen d'un faisceau laser, les informations étant rendues visibles en forme de changement des caractéristiques optiques à cause de changements irréversibles réalisés sur le matériau par un faisceau laser, caractérisé en ce que le support de données comporte au moins une couche transparente faite en matière plastique qui est munie, au moins dans une zone partielle, d'un relief superficiel en forme d'un réseau de lentilles (15), en ce qu'au moins une partie des informations inscrites au moyen du faisceau laser sont introduites à travers ce réseau de lentilles, en ce que le changement des caractéristiques optiques est limité à des zones (pixels) dont l'extension radiale est inférieure au diamètre d'une lentille unique, et en ce que les informations qui ont été inscrites par l'application de rayons laser sont disposées selon au moins deux directions différentes dans la région du réseau de lentilles, peuvent être lues et/ou captées par mesures techniques selon ces mêmes directions dans des zones angulaires limitées.

2. Support de données selon la revendication 1, caractérisé en ce qu'une pluralité d'informations (10a, 10b, 10c) susceptibles d'être lues sous différents angles sont enregistrées grâce au réseau de lentilles.

3. Support de données selon la revendication 1, caractérisé en ce que le réseau de lentilles est composé de lentilles cylindriques.

4. Support de données selon la revendication 1, caractérisé en ce que le réseau de lentilles est composé de lentilles sphériques.

5. Support de données selon la revendication 1, caractérisé en ce que le réseau de lentilles est composé d'un mélange de lentilles cylindriques et de lentilles sphériques.

6. Support de données selon la revendication 2 et 3, caractérisé en ce que les données (10a, 10b, 10c) enregistrées grâce au réseau de lentilles sont en forme d'une image composite faite de pixels de sorte que des suites de pixels disposées parallèlement à une ligne qui borde les axes longitudinaux des lentilles appartiennent à une partie d'image et les pixels voisins, qui sont perpendiculaires aux axes longitudinaux des lentilles, appartiennent à une autre partie d'image.

7. Support de données selon la revendication 2, caractérisé en ce que les informations (10a, 10b, 10c) sont des informations standards telles que logo, insignes de validité, etc., ainsi que données qui sont particulières au support de données en question telles que numéro de compte, numéro de carte, etc.

8. Support de données selon la revendication 1, caractérisé en ce que, à l'aide de pixels d'une largeur correspondante, qui sont visibles dans une plus grande zone angulaire, des détails d'informations sont introduits d'une telle façon que lesdites informations peuvent être lues selon différentes zones angulaires.

9. Support de données selon la revendication 1, caractérisé en ce qu'une feuille transparente (12) accessible à une écriture au moyen d'un laser est disposée entre la feuille (7) qui porte le relief superficiel (15), et une couche de coeur (6).

10. Support de données selon la revendication 9, caractérisé en ce que les feuilles (7, 12) sont réalisées en forme de feuilles de liaison.

11. Support de données selon la revendication 9, caractérisé en ce que la feuille (12) accessible à une écriture par un rayon laser est imprégnée de colorants qui sont distribués uniformément dans la masse de la feuille.

12. Support de données selon la revendication 9 ou 10, caractérisé en ce que les changements optiques dans les zones de volume de la feuille transparente existent en forme de pixels, conformés comme de petits bâtonnets orientés selon la direction du faisceau.

13. Support de données selon la revendication 5, caractérisé en ce que les lentilles sont disposées en forme d'un modèle susceptible d'être reconnu par voie tactile et visuelle.

14. Support de données selon la revendication 1, caractérisé en ce que les lentilles du réseau de lentilles possèdent différentes distances focales.

15. Support de données selon la revendication 1, caractérisé en ce que le pas du réseau de lentilles est supérieur au diamètre des lentilles.

16. Support de données selon la revendication 1, caractérisé en ce que le pas du réseau est différent dans différentes zones partielles du réseau de lentilles.

17. Support de données selon la revendication 1, caractérisé en ce que le réseau de lentilles comprend au moins partiellement des lentilles cylindriques, l'axe du cylindre n'étant pas disposé selon une ligne droite.

18. Support de données selon la revendication 1, caractérisé en ce que les sommets des lentilles disposées les unes à côté des autres sont placés à différentes hauteurs par rapport à la surface du support de données.

19. Support de données selon la revendication 1, caractérisé en ce que les lentilles (15) ont un diamètre de lentille entre 150 µm et 500 µm.

20. Support de données selon la revendication 1, caractérisé en ce qu'une impression superficielle est présente dans la zone de transition entre le réseau de lentilles et la surface du support de données dépourvue d'impression en relief.

21. Support de données selon la revendication 20, caractérisé en ce qu'il y a une transition continue entre le réseau de lentilles et l'impression en relief de surface.

22. Support de données selon la revendication 1, caractérisé en ce qu'un modèle, par exemple un ornement en guilloche, enregistré par laser est disposé dans la zone de bord du réseau de lentilles.

23. Support de données selon la revendication 1, caractérisé en ce que des informations supplémentaires, réalisées par des techniques d'impression, sont prévues au moins dans une zone partielle du relief superficiel (15).

24. Support de données selon la revendication 23, caractérisé en ce que les informations introduites par des techniques d'impression sont un modèle de fond dépourvu de période.

25. Support de données selon la revendication 24, caractérisé en ce que le modèle de fond se prolonge dans des zones du support de données externes à la région du réseau de lentilles.

26. Support de données selon la revendication 23 ou 24, caractérisé en ce que le modèle de fond est un modèle de grande valeur du point de vue de la sécurité, de préférence un modèle en guilloche.

27. Support de données selon la revendication 23, caractérisé en ce que les informations (26, 27) appliquées par des techniques d'impression sont introduites par rapport à la position et la forme des lentilles du réseau de lentilles, que lesdites informations ne sont visibles que selon des zones angulaires strictement limitées.

28. Support de données selon la revendication 27, caractérisé en ce que lesdites informations comprennent deux images formées en prenant en compte la géométrie de l'oeil et adaptées au réseau de lentilles qui, quand elles sont regardées simultanément, créent une impression tridimensionnelle.

29. Procédé pour l'introduction d'informations dans un support de données composé d'une couche support et d'une couche transparente en matière plastique, au moyen d'un faisceau laser, caractérisé en ce que:
- la couche transparente en matière plastique est munie, au moins dans une zone partielle, d'un relief superficiel en forme de réseau de lentilles;
- au moins une partie des informations sont introduites à travers le réseau de lentilles sous des angles prédéterminés, au moyen du faisceau laser, d'une telle manière que:
. le faisceau laser donne lieu à un changement irréversible et optiquement identifiable dans une zone de volume à l'intérieur du support de données; et
. ce changement soit limité à des zones plus étroites par rapport au diamètre ou à la largeur des lentilles, de sorte que les informations soient lisibles seulement selon des intervalles angulaires limités, qui correspondent à l'introduction par rayon Laser.

30. Procédé selon la revendication 29, caractérisé en ce qu'un modèle composé de lentilles consistant d'une pluralité de lentilles en forme de cylindre et/ou de sphère est introduit.

31. Procédé selon la revendication 29, caractérisé en ce que différentes informations sont inscrites avec le laser selon différents angles d'écriture.

32. Procédé selon la revendication 31, caractérisé en ce que l'angle d'écriture est changeable en faisant tourner le support de données selon un angle correspondant par rapport à l'axe optique.

33. Procédé selon la revendication 31, caractérisé en ce que l'angle d'écriture est changeable en dirigeant le faisceau laser dans des prismes, la disposition des prismes déterminant l'angle d'écriture.

34. Procédé selon la revendication 30, caractérisé en ce que le faisceau laser balaie le réseau de lentilles verticalement ou selon un angle entre 10 et 80°, de préférence 45°, par rapport au sens des lentilles cylindriques.

35. Procédé selon la revendication 31, caractérisé en ce qu'une première information est introduite au moyen du faisceau laser dirigé perpendiculairement à la surface du support de données (= 0°), une deuxième information étant introduite selon un angle entre plus 10° jusqu'à plus 35° et une troisième information étant introduite au moyen de faisceaux laser dirigés selon un angle entre moins 10° jusqu'à moins 35°.

36. Procédé selon la revendication 31, caractérisé en ce que plusieurs informations sont introduites au moyen du laser selon les mêmes pas angulaires et en ce que les informations se trouvent dans un rapport l'un à l'autre tel que, lors d'une inclinaison de la carte, les informations passent de l'une à l'autre d'une manière quasi-continue.

37. Procédé selon la revendication 29, caractérisé en ce que les informations sont introduites selon le procédé dit "palpage ponctuel" et en ce que les informations sont composées d'éléments individuels, appelés communément des pixels.

38. Procédé selon la revendication 37, caractérisé en ce que la vitesse de balayage et la fréquence d'impulsions du laser sont accordées l'une par rapport à l'autre de telle manière que, lors du balayage du réseau de lentilles, plusieurs impulsions laser frappent chaque lentille par pixel.

39. Procédé selon la revendication 37 ou 38, caractérisé en ce que la construction par couche du support et les matériaux utilisés sont choisis de telle manière que les changements optiques se produisent dans des zones de volume des régions en forme de couches transparentes du support de données, de manière à créer des pixels en forme de bâtonnets.

40. Procédé selon la revendication 39, caractérisé en ce que la puissance impulsionnelle du dispositif d'écriture inscription à faisceau laser est réglée de telle manière que les pixels en forme de bâtonnets ne se recouvrent, en ce qui concerne le volume, que très légèrement.

41. Procédé selon la revendication 39, caractérisé en ce qu'au moyen du laser, des informations supplémentaires sont introduites pour lesquelles le diamètre radial des pixels est élargi, suite à une commande correspondante de la puissance d'impulsion du laser, au point que les pixels soient susceptibles d'être reconnus sur un grand intervalle angulaire et éventuellement sous toutes les directions d'observation.

42. Procédé selon la revendication 29, caractérisé en ce que, dans la zone du relief superficiel, en plus des informations à inscrire au moyen du dispositif d'écriture à faisceau laser, des informations supplémentaires réalisées par des techniques d'impression sont prévues qui, en coopération avec le modèle composé de lentilles, sont disposées et réalisées d'une telle façon qu'au moins des parties de ces informations ne sont également visibles que selon certains intervalles angulaires fortement limités.

43. Procédé pour la vérification d'un support de données selon la revendication 1, caractérisé en ce que:
- le support de données est illuminé dans la région du modèle composé de lentilles selon des intervalles angulaires différents;
- la lumière qui est renvoyée de la région du support de données où se trouve le modèle composé de lentilles est évaluée par plusieurs détecteurs qui, dans chaque cas, ne détectent que la lumière correspondant à un intervalle angulaire déterminé;
- les signaux reçus des détecteurs sont envoyés à un dispositif de traitement de données où elles sont traitées et comparées avec des valeurs stockées en mémoire.

44. Procédé selon la revendication 43, caractérisé en ce que le support de données est analysé ligne par ligne sous différents angles dans la région du réseau de lentilles.

45. Procédé selon la revendication 43, caractérisé en ce que:
- la lumière renvoyée selon les différents angles est détectée intégralement sur la totalité de la région du réseau de lentilles;
- des valeurs de mesure intégrales qui sont spécifiques à chaque angle sont générées;
- lesdites valeurs de mesure sont normées en prenant des quotients; et
- les valeurs normées sont comparées avec des valeurs stockées en mémoire.
